# EUROPEAN PATENT APPLICATION

(11) **EP 4 561 143 A1**
(43) Date of publication of application: **28.05.2025**
(21) Application number: 23841914.7
(22) Date of filing: 30.05.2023
(51) Int. Cl.: H04W 24/02, H04W 36/08

(54) **SERVING CELL MANAGEMENT METHOD AND APPARATUS, TERMINAL, AND NETWORK DEVICE**

(30) Priority: 21.07.2022 CN 202210864370
(71) Applicant: Datang Mobile Communications Equipment Co., Ltd., Beijing 100085 (CN)
(72) Inventor: XU, Meng, Beijing 100085 (CN)
(74) Representative: Studio Torta S.p.A.
(86) International application number: PCT/CN2023/097091
(87) International publication number: WO 2024/016846

(57) **Abstract**

The present disclosure provides a serving cell management method, apparatus, terminal, and network device. The method includes: receiving, by a terminal, a first command sent by network device; and performing, by the terminal, management of the serving cell according to the first command and the configuration information of a pre-configured cell corresponding to the serving cell.

## Description

### CROSS-REFERENCE TO RELATED APPLICATIONS

This application claims a priority to Chinese Patent Application No. 202210864370.4 filed in China on July 21, 2022, the entire contents of which are incorporated herein by reference.

### TECHNICAL FIELD

The present disclosure relates to the field of communications technology, and in particular to a serving cell management method, apparatus, terminal, and network device.

### BACKGROUND

In a New Radio (NR) system, a User Equipment (UE) performs cell management (such as cell handover or changing the Primary SCG Cell, PSCell) based on Layer 3 commands, specifically Radio Resource Control (RRC) commands. For example, in a handover scenario, when the network side decides that the UE should perform a handover, the source cell initiates a handover preparation process with the target cell to obtain a handover command, which includes configuration information for the target cell. This handover command consists of RRC configuration information, and the source cell directly sends the handover command obtained from the target cell to the UE. After receiving the handover command, the UE synchronizes with the target cell according to the configuration information in the handover command, initiates a random access procedure, accesses the target cell, and completes the handover process. Currently, such cell management method based on Layer 3 commands requires interactions between Layer 3 signaling. Managing the Primary Cell (PCell) or PSCell involves configuration signaling and a random access procedure, while management of a SCell requires releasing and re-adding the SCell through Layer 3 signaling, leading to significant latency issues.

### SUMMARY

The present disclosure provides a serving cell management method, device, terminal and network device for solving the problem of significant latency associated with the cell management methods based on Layer 3 commands.

An embodiment of the present disclosure provides a serving cell management method, including:
receiving, by a terminal, a first command sent by network device;
performing, by the terminal, management of the serving cell according to the first command and the configuration information of a pre-configured cell corresponding to the serving cell.

Optionally, the first command carries at least one of the following information:
identification information of the serving cell;
identification information of first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of at least one second pre-configured cell for which configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

Optionally, the first command also carries first information needed to activate for the serving cell; wherein the first information includes at least one of the following:
Transmission Configuration Indicator (TCI) information;
uplink spatial relation;
identification information of the downlink Bandwidth Part (BWP);
identification information of the uplink BWP;
eighth indication information for indicating the Radio Link Monitoring Reference Signal (RLM RS);
ninth indication information for indicating the Beam Failure Detection Reference Signal (BFD RS).

Optionally, when the first command carries the first information, the terminal further performs at least one of the following operations according to the first information:
activating the TCI;
activating the uplink spatial relation;
activating the downlink BWP;
activating the uplink BWP;
restarting or stopping the BFD-related timer;
resetting the BFD-related counter;
applying the BFD RS;
applying the RLM RS;
resetting the RLM-related counter;
restarting or stopping the RLM-related timer.

Optionally, the first command is a physical layer command or a Medium Access Control (MAC) Control Element (CE) command.

Optionally, the serving cell is at least one of the following:
A special cell;
An activated secondary cell;
A secondary cell in dormant mode.

Optionally, when the serving cell is a secondary cell, the terminal determines that the secondary cell is activated according to the first command;
and/or,
when the serving cell is a special cell, the terminal determines that the special cell is activated according to the first command.

Optionally, before the terminal receiving the first command sent by the network device, the method further includes:
receiving, by the terminal, a second command sent by the network device;
determining, by the terminal, the configuration information of the pre-configured cell corresponding to the serving cell according to the second command;
wherein the second command carries at least one of the following information:
   identification information of the serving cell;
   identification information of pre-configured cell group;
   identification information of configuration information group;
   identification information of serving cell group;
   at least one pre-configured cell corresponding to the serving cell;
   at least one configuration information of the pre-configured cell corresponding to the serving cell;
   tenth indication information for indicating a third pre-configured cell to activate or apply;
   eleventh indication information for indicating the second configuration information of the third pre-configured cell to activate or apply;
   correspondence between serving cell and serving cell group;
   correspondence between pre-configured cell and pre-configured cell group;
   correspondence between configuration information and configuration information group;
   association between serving cell group or serving cell and pre-configured cell group;
   association between pre-configured cell or pre-configured cell group and configuration information group.

Optionally, the terminal performs at least one of the following operations according to the first command or the second command:
activating or applying the target pre-configured cell corresponding to the serving cell;
activating or applying the target configuration information of the target pre-configured cell;
deactivating the configuration information of pre-configured cells other than the target pre-configured cell;
deactivating the configuration information corresponding to the target pre-configured cell other than the target configuration information;
applying the Cell Radio Network Temporary Identifier (C-RNTI) corresponding to the target pre-configured cell;
maintaining the state of the serving cell;
wherein the target pre-configured cell is the first pre-configured cell or the third pre-configured cell, and the target configuration information is the first configuration information or the second configuration information.

Optionally, the serving cell management method further includes:
receiving, by the terminal, a third command sent by the network device;
updating, by the terminal, the configuration information of the pre-configured cell corresponding to the serving cell according to the third command;
wherein the third command carries at least one of the following information:
   identification information of the serving cell;
   identification information of the serving cell group;
   identification information of pre-configured cell group;
   twelfth indication information for indicating at least one of addition, modification, or release of pre-configured cells associated with the serving cell or serving cell group;
   thirteenth indication information for indicating at least one of the addition, modification, or release of pre-configured cell groups associated with the serving cell or serving cell group;
   fourteenth indication information for indicating at least one of the addition, modification, or release of configuration information associated with the pre-configured cell or pre-configured cell group;
   fifteenth indication information for indicating at least one of the addition, modification, or release of configuration information groups associated with the pre-configured cell or pre-configured cell group;
   sixteenth indication information for indicating at least one of the addition, modification, or release of the serving cell group.

Optionally, the second command and/or the third command is Radio Resource Control signaling.

The present embodiment of this disclosure also provides a serving cell management method, including:
sending, by a network device, a first command to a terminal, where the first command is used to instruct the terminal to manage the serving cell based on the configuration information of a pre-configured cell corresponding to the serving cell.

Optionally, the first command carries at least one of the following information:
identification information of the serving cell;
identification information of the first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of a second pre-configured cell for which at least one configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

Optionally, the first command also carries first information needed to activate for the serving cell, wherein the first information includes at least one of the following:
activated TCI (Transmission Configuration Indicator) information;
uplink spatial relation;
activated downlink BWP (Bandwidth Part) identification information;
identification information of the uplink BWP;
eighth indication information for indicating the RLM RS (Radio Link Monitoring Reference Signal);
ninth indication information for indicating the BFD RS (Beam Failure Detection Reference Signal).

Optionally, the first command is a physical layer command or a Medium Access Control (MAC) Control Element command.

Optionally, the serving cell is at least one of the following:
a special cell;
an activated secondary cell;
a secondary cell in dormant mode.

Optionally, before the network device sending the first command to the terminal, the method further includes:
sending, by the network device, a second command to the terminal, the second command is used to determine the configuration information of the pre-configured cell corresponding to the serving cell.

The second command carries at least one of the following information:
identification information of the serving cell;
identification information of pre-configured cell group;
identification information of serving cell group;
identification information of configuration information group;
at least one pre-configured cell corresponding to the serving cell;
at least one configuration information of the pre-configured cell corresponding to the serving cell;
tenth indication information for indicating a third pre-configured cell to activate or apply;
eleventh indication information for indicating the second configuration information of the third pre-configured cell to activate or apply;
correspondence between serving cell and serving cell group;
correspondence between pre-configured cell and pre-configured cell group;
correspondence between configuration information and configuration information group;
association between serving cell group or serving cell and pre-configured cell group;
association between pre-configured cell or pre-configured cell group and configuration information group.

Optionally, the serving cell management method further includes:
sending, by the network device, a third command to the terminal, the third command is used to update the configuration information of the pre-configured cell corresponding to the serving cell.

The third command carries at least one of the following:
identification information of the serving cell;
identification information of the serving cell group;
identification information of pre-configured cell group;
twelfth indication information for indicating at least one of the addition, modification, or release of pre-configured cells associated with the serving cell or serving cell group;
thirteenth indication information for indicating at least one of the addition, modification, or release of pre-configured cell groups associated with the serving cell or serving cell group;
fourteenth indication information for indicating at least one of the addition, modification, or release of configuration information associated with the pre-configured cell or pre-configured cell group;
fifteenth indication information for indicating at least one of the addition, modification, or release of configuration information groups associated with the pre-configured cell or pre-configured cell group;
sixteenth indication information for indicating at least one of the addition, modification, or release of the serving cell group.

Optionally, the second and/or third commands are Radio Resource Control signaling.

The embodiment of the present disclosure also provides a serving cell management apparatus, which includes memory, a transceiver, and a processor;
wherein the memory is used to store computer programs; the transceiver is used for transmitting and receiving data under the control of the processor; the processor is used to read the computer programs stored in the memory and perform the following operations:
receiving the first command sent by the network device; and
performing management of the serving cell according to the first command and the configuration information of the pre-configured cell corresponding to the serving cell.

Optionally, the first command carries at least one of the following information:
identification information of the serving cell;
identification information of the first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of a second pre-configured cell for which at least one configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

Optionally, the first command also carries first information needed to activate for the serving cell, wherein the first information includes at least one of the following:
activated TCI (Transmission Configuration Indicator) information;
uplink spatial relation;
activated downlink BWP (Bandwidth Part) identification information;
identification information of the uplink BWP;
eighth indication information for indicating the RLM RS (Radio Link Monitoring Reference Signal);
ninth indication information for indicating the BFD RS.

Optionally, when the first command carries the first information, the processor reads the computer program from the memory and executes at least one of the following operations:
activating the TCI;
activating the uplink spatial relation;
activating the downlink BWP;
activating the uplink BWP;
restarting or stopping BFD-related timer;
resetting BFD-related counter;
applying BFD RS;
applying RLM RS;
resetting RLM-related counter;
restarting or stopping RLM-related timer.

Optionally, the first command is a physical layer command or MAC CE command.

Optionally, the serving cell is at least one of the following:
a special cell;
an activated secondary cell;
a secondary cell in dormant mode.

Optionally, when the serving cell is a secondary cell, it can be determined as activated based on the first command; and/or if the serving cell is a special cell, it can be determined as activated based on the first command.

Optionally, the processor reads the computer program and performs the following operation:
receiving the second command sent by the network device; and
determining the configuration information of the pre-configured cell corresponding to the serving cell based on the second command;
wherein the second command carries at least one of the following information:
identification information of the serving cell;
identification information of the serving cell group;
identification information of pre-configured cell group;
at least one pre-configured cell corresponding to the serving cell;
at least one configuration information of the pre-configured cell corresponding to the serving cell;
identification information of configuration information group;
tenth indication information for indicating the activation or application of the third pre-configured cell;
eleventh indication information for indicating the second configuration information of the third pre-configured cell to activate or apply;
correspondence between serving cell and serving cell group;
correspondence between pre-configured cell and pre-configured cell group;
correspondence between configuration information and configuration information group;
association between serving cell group or serving cell and pre-configured cell group;
association between pre-configured cell or pre-configured cell group and configuration information group.

Optionally, the processor reads the computer program and performs at least one of the following operations:
activating or applying the target pre-configured cell corresponding to the serving cell;
activating or applying the target configuration information of the target pre-configured cell;
deactivating configuration information of pre-configured cells other than the target pre-configured cell;
deactivating configuration information corresponding to the target pre-configured cell other than the target configuration information;
applying the C-RNTI (Cell Radio Network Temporary Identifier) corresponding to the target pre-configured cell;
maintaining the state of the serving cell;
wherein the target pre-configured cell is the first pre-configured cell or the third pre-configured cell, and the target configuration information is the first configuration information or the second configuration information.

Optionally, the processor is used to read the computer program and perform the following operations:
receiving the third command sent by the network device; and
updating the configuration information of the pre-configured cell corresponding to the serving cell according to the third command;
wherein the third command carries at least one of the following information:
identification information of the serving cell;
identification information of the serving cell group;
identification information of pre-configured cell group;
twelfth indication information for indicating at least one of the addition, modification, or release of pre-configured cells associated with the serving cell or serving cell group;
thirteenth indication information for indicating at least one of the addition, modification, or release of pre-configured cell groups associated with the serving cell or serving cell group;
fourteenth indication information for indicating at least one of the addition, modification, or release of configuration information associated with the pre-configured cell or pre-configured cell group;
fifteenth indication information for indicating at least one of the addition, modification, or release of configuration information groups associated with the pre-configured cell or pre-configured cell group;
sixteenth indication information for indicating at least one of the addition, modification, or release of the serving cell group.

Optionally, the second and/or third commands are Radio Resource Control signaling.

The embodiment of the present disclosure provides a terminal, including:
a first receiving unit for receiving the first command sent by the network device; and
a processing unit for performing management of the serving cell according to the first command and configurations.

Optionally, the first command carries at least one of the following information:
identification information of the serving cell;
identification information of first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of at least one second pre-configured cell for which configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

Optionally, the first command also carries first information needed to activate for the serving cell; wherein the first information includes at least one of the following:
Transmission Configuration Indicator (TCI) information;
uplink spatial relation;
identification information of the downlink Bandwidth Part (BWP);
identification information of the uplink BWP;
eighth indication information for indicating the Radio Link Monitoring Reference Signal (RLM RS);
ninth indication information for indicating the Beam Failure Detection Reference Signal (BFD RS).

Optionally, when the first command carries the first information, the terminal further performs at least one of the following operations according to the first information:
activating the TCI;
activating the uplink spatial relation;
activating the downlink BWP;
activating the uplink BWP;
restarting or stopping the BFD-related timer;
resetting the BFD-related counter;
applying the BFD RS;
applying the RLM RS;
resetting the RLM-related counter;
restarting or stopping the RLM-related timer.

Optionally, the first command is a physical layer command or a Medium Access Control (MAC) Control Element (CE) command.

Optionally, the serving cell is at least one of the following:
a special cell;
an activated secondary cell;
a secondary cell in dormant mode.

Optionally, when the serving cell is a secondary cell, the terminal determines that the secondary cell is activated according to the first command;
and/or,
when the serving cell is a special cell, the terminal determines that the special cell is activated according to the first command.

Optionally, the terminal further includes:
a second receiving unit for receiving a second command sent by the network device;
a determining unit for determining the configuration information of the pre-configured cell corresponding to the serving cell according to the second command;
wherein the second command carries at least one of the following information:
   identification information of the serving cell;
   identification information of pre-configured cell group;
   identification information of configuration information group;
   identification information of serving cell group;
   at least one pre-configured cell corresponding to the serving cell;
   at least one configuration information of the pre-configured cell corresponding to the serving cell;
   tenth indication information for indicating a third pre-configured cell to activate or apply;
   eleventh indication information for indicating the second configuration information of the third pre-configured cell to activate or apply;
   correspondence between serving cell and serving cell group;
   correspondence between pre-configured cell and pre-configured cell group;
   correspondence between configuration information and configuration information group;
   association between serving cell group or serving cell and pre-configured cell group;
   association between pre-configured cell or pre-configured cell group and configuration information group.

Optionally, the terminal performs at least one of the following operations according to the first command or the second command:
activating or applying the target pre-configured cell corresponding to the serving cell;
activating or applying the target configuration information of the target pre-configured cell;
deactivating the configuration information of pre-configured cells other than the target pre-configured cell;
deactivating the configuration information corresponding to the target pre-configured cell other than the target configuration information;
applying the Cell Radio Network Temporary Identifier (C-RNTI) corresponding to the target pre-configured cell;
maintaining the state of the serving cell;
wherein the target pre-configured cell is the first pre-configured cell or the third pre-configured cell, and the target configuration information is the first configuration information or the second configuration information.

Optionally, the terminal further includes:
a third receiving unit for receiving a third command sent by the network device;
an updating unit for updating the configuration information of the pre-configured cell corresponding to the serving cell according to the third command;
wherein the third command carries at least one of the following information:
identification information of the serving cell;
identification information of the serving cell group;
identification information of pre-configured cell group;
twelfth indication information for indicating at least one of addition, modification, or release of pre-configured cells associated with the serving cell or serving cell group;
thirteenth indication information for indicating at least one of the addition, modification, or release of pre-configured cell groups associated with the serving cell or serving cell group;
fourteenth indication information for indicating at least one of the addition, modification, or release of configuration information associated with the pre-configured cell or pre-configured cell group;
fifteenth indication information for indicating at least one of the addition, modification, or release of configuration information groups associated with the pre-configured cell or pre-configured cell group;
sixteenth indication information for indicating at least one of the addition, modification, or release of the serving cell group.

Optionally, the second command and/or the third command is Radio Resource Control signaling.
The embodiment of the present disclosure also provides a serving cell management apparatus, which includes memory, a transceiver, and a processor;
wherein the memory is used to store computer programs; the transceiver is used for transmitting and receiving data under the control of the processor; the processor is used to read the computer programs stored in the memory and perform the following operations:
   sending a first command to a terminal, wherein the first command is used to instruct the terminal to manage the serving cell based on the configuration information of a pre-configured cell corresponding to the serving cell.

Optionally, the first command carries at least one of the following information:
identification information of the serving cell;
identification information of the first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of a second pre-configured cell for which at least one configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

Optionally, the first command also carries first information needed to activate for the serving cell, wherein the first information includes at least one of the following:
TCI information;
uplink spatial relation;
activated downlink BWP (Bandwidth Part) identification information;
identification information of the uplink BWP;
eighth indication information for indicating the RLM RS;
ninth indication information for indicating the BFD RS.

Optionally, the first command is a physical layer command or a Medium Access Control (MAC) Control Element command.

Optionally, the serving cell is at least one of the following:
a special cell;
an activated secondary cell;
a secondary cell in dormant mode.

Optionally, the processor reads the computer program from the memory and executes at least one of the following operations:
sending a second command to the terminal, wherein the second command carries at least one of the following information:
identification information of the serving cell;
identification information of pre-configured cell group;
identification information of serving cell group;
identification information of configuration information group;
at least one pre-configured cell corresponding to the serving cell;
at least one configuration information of the pre-configured cell corresponding to the serving cell;
tenth indication information for indicating a third pre-configured cell to activate or apply;
eleventh indication information for indicating the second configuration information of the third pre-configured cell to activate or apply;
correspondence between serving cell and serving cell group;
correspondence between pre-configured cell and pre-configured cell group;
correspondence between configuration information and configuration information group;
association between serving cell group or serving cell and pre-configured cell group;
association between pre-configured cell or pre-configured cell group and configuration information group.

Optionally, the processor reads the computer program from the memory and executes at least one of the following operations:
sending a third command to the terminal, the third command is used to update the configuration information of the pre-configured cell corresponding to the serving cell;
wherein the third command carries at least one of the following information:
   identification information of the serving cell;
   identification information of the serving cell group;
   identification information of pre-configured cell group;
   twelfth indication information for indicating at least one of the addition, modification, or release of pre-configured cells associated with the serving cell or serving cell group;
   thirteenth indication information for indicating at least one of the addition, modification, or release of pre-configured cell groups associated with the serving cell or serving cell group;
   fourteenth indication information for indicating at least one of the addition, modification, or release of configuration information associated with the pre-configured cell or pre-configured cell group;
   fifteenth indication information for indicating at least one of the addition, modification, or release of configuration information groups associated with the pre-configured cell or pre-configured cell group;
   sixteenth indication information for indicating at least one of the addition, modification, or release of the serving cell group.

Optionally, the second and/or third commands are Radio Resource Control signaling.

The present embodiment of this disclosure also provides a network device, including:
a first sending unit for sending a first command to a terminal, where the first command is used to instruct the terminal to manage the serving cell based on the configuration information of a pre-configured cell corresponding to the serving cell.

Optionally, the first command carries at least one of the following information:
identification information of the serving cell;
identification information of the first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of a second pre-configured cell for which at least one configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

Optionally, the first command also carries first information needed to activate for the serving cell, wherein the first information includes at least one of the following:
TCI information;
uplink spatial relation;
identification information of the downlink BWP;
identification information of the uplink BWP;
eighth indication information for indicating the RLM RS;
ninth indication information for indicating the BFD RS.

Optionally, the first command is a physical layer command or a Medium Access Control (MAC) Control Element command.

Optionally, the serving cell is at least one of the following:
a special cell;
an activated secondary cell;
a secondary cell in dormant mode.

Optionally, the network device further includes:
a second sending unit, for sending a second command to the terminal, the second command is used to determine the configuration information of the pre-configured cell corresponding to the serving cell;
wherein the second command carries at least one of the following information:
   identification information of the serving cell;
   identification information of pre-configured cell group;
   identification information of serving cell group;
   identification information of configuration information group;
   at least one pre-configured cell corresponding to the serving cell;
   at least one configuration information of the pre-configured cell corresponding to the serving cell;
   tenth indication information for indicating a third pre-configured cell to activate or apply;
   eleventh indication information for indicating the second configuration information of the third pre-configured cell to activate or apply;
   correspondence between serving cell and serving cell group;
   correspondence between pre-configured cell and pre-configured cell group;
   correspondence between configuration information and configuration information group;
   association between serving cell group or serving cell and pre-configured cell group;
   association between pre-configured cell or pre-configured cell group and configuration information group.

Optionally, the network device further includes:
a third sending unit, for sending a third command to the terminal, the third command is used to update the configuration information of the pre-configured cell corresponding to the serving cell.

The third command carries at least one of the following information:
identification information of the serving cell;
identification information of the serving cell group;
identification information of pre-configured cell group;
twelfth indication information for indicating at least one of the addition, modification, or release of pre-configured cells associated with the serving cell or serving cell group;
thirteenth indication information for indicating at least one of the addition, modification, or release of pre-configured cell groups associated with the serving cell or serving cell group;
fourteenth indication information for indicating at least one of the addition, modification, or release of configuration information associated with the pre-configured cell or pre-configured cell group;
fifteenth indication information for indicating at least one of the addition, modification, or release of configuration information groups associated with the pre-configured cell or pre-configured cell group;
sixteenth indication information for indicating at least one of the addition, modification, or release of the serving cell group.

Optionally, the second and/or third commands are Radio Resource Control signaling.

The embodiment of the disclosure provides a processor readable storage medium, comprising computer programs stored therein, for enabling processors to execute the steps of the serving cell management method on the terminal side described above or for enabling processors to execute the steps of the serving cell management method on the network device side described above.

The beneficial effect of the above technical solution is that network devices can pre-configure the configuration information of multiple pre-configured cells corresponding to serving cells. Terminals can manage serving cells based on the first command sent by network devices and the pre-configured cell configurations, thereby reducing delays and addressing the significant delay in the current cell management methods based on Layer 3 command.

### BRIEF DESCRIPTION OF THE DRAWINGS

Figure 1 shows a flowchart of the serving cell management method on the terminal side according to an embodiment of the present disclosure.
Figure 2 illustrates a flowchart of the serving cell management method on the network device side according to an embodiment of the present disclosure.
Figure 3 illustrates a block diagram of the terminal according to an embodiment of the present disclosure.
Figure 4 illustrates a block diagram of the serving cell management apparatus on the terminal side according to an embodiment of the present disclosure.
Figure 5 illustrates a block diagram of the network device according to an embodiment of the present disclosure.
Figure 6 illustrates a block diagram of the serving cell management apparatus on the network device side according to an embodiment of the present disclosure.

### DETAILED DESCRIPTION

In order to make a to-be-solved technical problem, a technical solution and advantages of the present disclosure clearer, a detailed description will be given below in conjunction with the accompanying drawings and specific embodiments. In the following description, specific details such as specific configurations and components are provided merely to assist in a comprehensive understanding of the embodiments of the present disclosure. Therefore, those skilled in the art should be appreciated that various changes and modifications can be made to the embodiments described herein without departing from the scope and spirit of the present disclosure. In addition, for clarity and conciseness, descriptions of known functions and constructions have been omitted.

It should be appreciated that "an embodiment" or "one embodiment" mentioned throughout the specification means that specific features, structures, or characteristics related to the embodiment are included in at least one embodiment of the present disclosure. Therefore, words "in an embodiment" or "in one embodiment" appearing throughout the entire specification may not necessarily refer to the same embodiment. In addition, these specific features, structures, or characteristics can be combined in one or more embodiments in any suitable manner.

In various embodiments of the present disclosure, it should be appreciated that the size of a sequence number of each of the following processes does not imply the order of execution, and the execution order of each process should be determined based on the function and internal logic of the each process, which should not constitute any limitations on the implementation process of the present disclosure.

The term "and/or" in the embodiments of the present disclosure describes an association relationship of associated objects, indicating that there may be three types of relationships. For example, A and/or B, which can represent three situations of A alone, both A and B, and B alone. The character "/" generally indicates that the associated objects before and after the character is in an "or" relationship.

The terms "system" and "network" in the embodiments of the present disclosure can be interchanged in the present disclosure.

Schemes in the embodiments of the present disclosure may be applied to various systems, especially a 5G system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

Multi Input Multi Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

The term "and/or" in the embodiments of the present disclosure describes an association relationship of associated objects, indicating that there may be three types of relationships. For example, A and/or B, which can represent three situations of A alone, both A and B, and B alone. The character "/" generally indicates that the associated objects before and after the character is in an "or" relationship.

The term "multiple" in the embodiments of the present disclosure refers to two or more, and other quantifiers are similar thereto.

The technical solution of embodiments of the present disclosure will be clearly and completely described hereinafter in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

The following introduces related technologies in the present field.

### 1. Handover or PSCell Change Process

In NR systems, a UE executes cell handover or PSCell change based on Layer 3 commands. For example, when network device decides that the UE should perform a handover, the source cell initiates a handover preparation process to the target cell to obtain a handover command containing the configuration information of the target cell. This handover command is RRC (Radio Resource Control) configuration information, which is sent by the source cell directly to the UE. After receiving the handover command, the UE synchronizes with the target cell according to the configuration information in the handover command, initiates a random access procedure to access the target cell, and completes the handover process.

NR systems support Conditional Handover (CHO) and Conditional PSCell Change (CPC), which operate on similar principles. The network device preconfigures at least one target cell and related execution conditions via RRC signaling and provides them to the UE. Upon receiving the CHO/CPC configuration information, the UE evaluates the preconfigured target cells based on the execution conditions specified by the network device. When the UE finds a cell meeting the execution conditions, this cell is determined as the target cell, the UE accesses the target cell, and completes the handover or PSCell change process.

### 2. Special Cell (SpCell) and Secondary Cell (SCell)

The network device can configure dual connectivity and carrier aggregation (CA) for the UE to increase the transmission bandwidth and improve throughput. Dual connectivity involves configuring a Master Cell Group (MCG) and a Secondary Cell Group (SCG) for the UE, each containing at least one serving cell, including an SpCell. The SpCell in MCG is referred to as PCell, and the SpCell in SCG is called PSCell, and all other cells are SCells. The UE needs to perform radio link monitoring on the SpCell.

To achieve faster cell management than with Layer 3 commands, support for Layer 1 and Layer 2 mobility is considered. However, unlike Layer 3 commands, Layers 1 and Layer 2 commands cannot carry extensive configuration information. Therefore, they cannot include the target cell's configuration details when issued, and their cell change mechanism isn't limited to handovers and PSCell changes, as it can also apply to SCells. Traditional management of SCells involves notifying of releases and additions via RRC signaling, but there is currently no specific solution for notifying terminals to manage serving cells using Layer 1 or Layer 2 commands.

The present disclosure provides a serving cell management method, apparatus, terminal, and network device to reduce the latency commonly experienced with current Layer 3 command-based cell management methods. Because the methods and devices (or terminals or network device) are based on similar solutions to similar problems, implementations of methods and devices (or terminals or network device) may refer to one another, and repeated portions will be omitted.

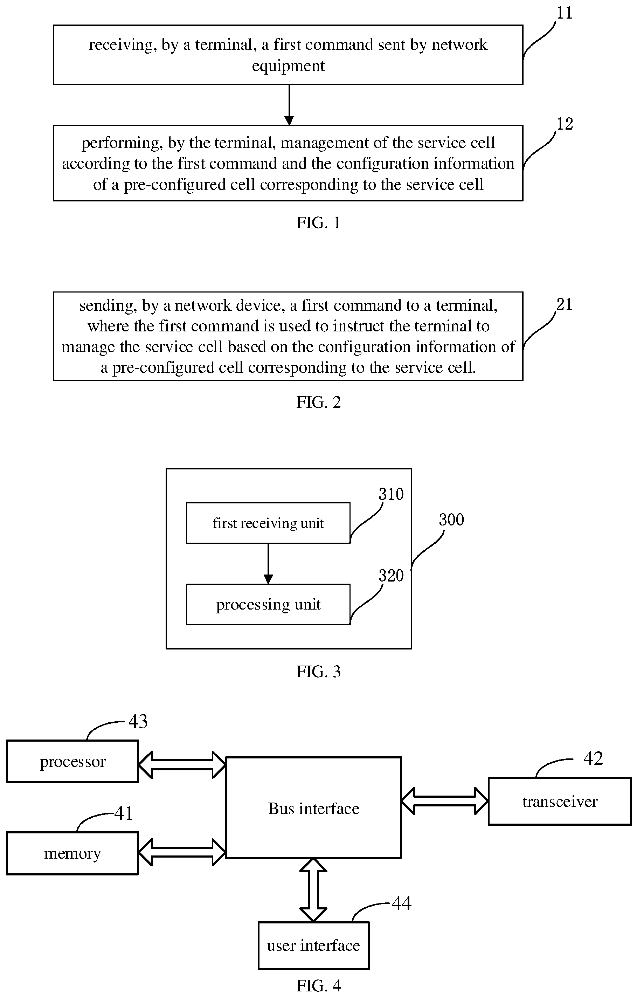

As shown in Figure 1, an embodiment of the present disclosure provides a serving cell management method, including the following steps:
Step 11: The terminal receives a first command sent by the network device.

Optionally, the first command can be a Layer 1 or Layer 2 command, i.e., the first command is a physical layer command or a MAC Control Element command. Optionally, the first command is used to instruct the terminal to perform serving cell management. For instance, by using Layer 1 or Layer 2 commands, faster serving cell management can be achieved compared to Layer 3 commands.

Step 12: The terminal manages the serving cell according to the first command and the configuration information of the pre-configured cell corresponding to the serving cell.

Optionally, the terminal is configured with multiple serving cells by the network device, with each serving cell potentially corresponding to one or more pre-configured cells. For example, pre-configured cells may be configured for each serving cell, meaning each serving cell has one or more corresponding pre-configured cells; alternatively, pre-configured cells could be configured for each group of serving cells, where a group of serving cells shares a set of pre-configured cells. Or the entire node might correspond to a single set of pre-configured cells; taking the MCG as an example, all serving cells configured in the MCG share the same pre-configured cell(s). One or more pre-configured cells could form a group, and a serving cell might correspond to one or more groups. Different serving cells may correspond to the same or different groups, with the serving cell's corresponding pre-configured cell groups being either pre-configured or determined based on the first command, among other possibilities. The present disclosure is not limited to these configurations.

Optionally, each pre-configured cell can have one or more pieces of configuration information. For instance, configuration information might be specific to each pre-configured cell, meaning each pre-configured cell can have one or more pieces of configuration information; it might also be specific to each pre-configured cell group, so multiple pre-configured cells can share one piece of configuration information. Alternatively, one or more pieces of configuration information can form a group, with a pre-configured cell corresponding to one or more groups, and different pre-configured cells may correspond to the same or different groups. A pre-configured cell group may correspond to one or more configuration information groups, with each pre-configured cell within a group having the same or different configuration information groups, etc. Configuration information groups corresponding to the pre-configured cells or groups can be preconfigured or determined based on the first command. The present disclosure does not limit to this arrangement.

It should be noted that a piece of configuration information can include at least one configuration parameter or comprise a group of configuration parameters or a set of configuration parameters.

Optionally, the management of serving cells includes, but is not limited to, at least one of the following: addition or change of serving cells; release, activation, or deactivation of configuration information of pre-configured cells corresponding to the target serving cell as indicated by the first command; release, activation, or deactivation of pre-configured cells of the serving cell; release, activation, or deactivation of configuration information of pre-configured cells corresponding to the serving cell. This includes, but is not limited to, release, activation, or deactivation of configuration information of source-activated pre-configured cells corresponding to the target serving cell, and release, activation, or deactivation of configuration information of pre-configured cells corresponding to serving cells other than the target serving cell. The present disclosure is not limited thereto.

Optionally, the first command can only be applied to serving cells configured within the cell group that receives the command, meaning the terminal activates or applies the first command to the serving cells in the cell group corresponding to the cell group which receives the first command. For example, if the UE receives the first command through MAC or physical layer signaling of the MCG, the serving cells management is for the cells of the MCG. Conversely, if the UE receives the first command through MAC or physical layer signaling of the SCG, the serving cells management is for the cells of the SCG.

Optionally, the first command is applicable to any serving cell configured by the UE, meaning the terminal activates or applies the first command to any serving cell configured by the UE, without needing to differentiate whether the signaling is received via the MCG or SCG side. For instance, if the UE receives the first command through MAC or physical layer signaling from either the MCG or SCG, the serving cells in the first command may include those configured within the MCG, the SCG, or both. Optionally, the first command can be sent through the MCG, the SCG, or the first command can only be sent through one of them.

Optionally, the serving cell (i.e., the serving cell indicated by the first command to activate or apply) can be at least one of the following: a special cell; an activated secondary cell; a secondary cell in dormant mode. This means that the serving cells included in the first command can be SpCell such as PCell and/or PSCell, and/or an activated SCell. i.e. If the current SCell is deactivated, it will not be managed by the first command, and/or a secondary cell in dormant mode, which can be: an activated secondary cell with activated BWP is a dormant BWP or a SCell in a dormant state.

Optionally, when the serving cell is a secondary cell, the terminal determines the secondary cell to be active based on the first command, and/or when the serving cell is a special cell, the terminal determines the special cell to be active based on the first command. That is, for the serving cell indicated in the first command, once the UE applies the configuration for the serving cell as instructed, if that serving cell is a secondary cell, the UE considers it active, even if the SCell was deactivated before receiving the first command. Similarly, if the serving cell is an SpCell, the UE considers this special cell active regardless of its pre-command state, such as the case with a PSCell being deactivated while the SCG is deactivated, upon receiving the first command, the UE regards the PSCell as active, or the SCG is in an activated state.

In the above solution, the network device can pre-configure configuration information of pre-configured cells corresponding for multiple serving cells for the terminal. The terminal can perform serving cell management based on the first command sent by the network device and preconfigured configuration information of corresponding pre-configured cells for multiple serving cells to reduce latency, thereby addressing the issue of significant delays in currently Layer 3 command-based cell management methods.

Optionally, the first command carries at least one of the following pieces of information:
Serving cell identification information: The serving cell identification information is used to indicate the serving cell to which the first command applies. For example, assume the UE is configured with SpCell, SCell1, SCell2, and SCell3, where SCell1 and SCell3 are in the activated state, but SCell2 is deactivated. The unified serving cell indexes corresponding to SpCell, SCell1, SCell2, and SCell3 are 0, 1, 2, and 3, respectively. In this case, the identification information could be the cell index (index). For example, the cell index may represent the serving cell index: 0 corresponds to SpCell, 1 corresponds to SCell1, and 3 corresponds to SCell3, etc.; or it may correspond to the cell index of the serving cells applicable to the first command, arranged based on preset rules. For example, if the first command only applies to SpCell and/or activated SCells, then the corresponding cell index can refer to these applicable cells. If a preset rule arranges the activated SCells in ascending order, then index1 corresponds to SCell1, and index2 corresponds to SCell3. The identification information can also be a bitmap that represents the serving cells. Each bit corresponds to a serving cell, and when a given bit is set to 1, it indicates that the first command applies to the corresponding serving cell. For example, using the above scenario, if the bitmap is sorted by serving cell index in ascending order, "1101" corresponds to SpCell, SCell1, and SCell3. If the bitmap represents the applicable serving cells for the first command and excludes inactive SCells, then for the same example, "101" corresponds to SpCell and SCell3, meaning the bits do not include the deactivated SCell2. Optionally, if the first command contains identification information of cell group, the specified cells can include serving cells associated with the identified cell group or cells applicable to the first command. For example: if the cell group identification corresponds to MCG (Master Cell Group), the applicable serving cells are those configured within the MCG; optionally, if the first command includes identification information of serving cell group, the indicated cells can belong to the specified serving cell group or be cells applicable to the first command. For example: SpCell and SCell1 correspond to Serving cell Group 1, while SCell2 and SCell3 correspond to Serving cell Group 2. If the serving cell group identification is "2", the applicable range of serving cells covers SCell2 and SCell3. The specific index or bitmap can be determined according to preset rules within the serving cell group. Optionally, if the indicated serving cell does not exist, the first command directs the UE to add the serving cell and apply or activate related pre-configured cell configuration information.

Identification information of the first pre-configured cell to activate or apply; wherein the identification information of the first pre-configured cell is used to indicate the pre-configured cell to be applied or activated for the serving cell when execute the first command. For example: each serving cell may be pre-configured with one or more pre-configured cells, and each pre-configured cell corresponds to a piece of configuration information. In this case, the identification information of the first pre-configured cell to activate or apply can be used to indicate the configuration information of the first pre-configured cell corresponding to the serving cell to be activated or applied. Alternatively, each serving cell may be pre-configured with one or more pre-configured cells, and each pre-configured cell may contain one or more pieces of configuration information. In this case, the identification information of the first pre-configured cell to activate or apply can be used to indicate the first pre-configured cell to activate or apply corresponding to the serving cell, optionally activating or applying the first configuration information of the first pre-configured cell by the following first indication information. Optionally, if the first command carries the identification information of the pre-configured cell group, the first pre-configured cell may also belong to the group of pre-configured cells corresponding to the pre-configured cell group specified in the command. For example, the pre-configured cell group is preset as the pre-configured cell group associated with the serving cell.

First indication information: used to indicate the first configuration information of the first pre-configured cell to activate or apply; wherein the first indication information is used to indicate the first configuration information of the first pre-configured cell activated or applied by the serving cell to which the first command applies; for example: if each serving cell is configured with at least one pre-configured cell, and each pre-configured cell contains multiple pieces of configuration information, the first indication information can indicate the first configuration information of the first pre-configured cell to be applied or activated as determined by the first command on the corresponding serving cell. Optionally, if the first command carries configuration group identification information, the first configuration information may also be information belonging to the configuration group corresponding to the specified pre-configured cell group. This configuration group may correspond to the first pre-configured cell.

Second indication information: used to indicate whether to release pre-configured cells other than the first pre-configured cell; wherein the second indication information can consist of one bit to indicate whether to release pre-configured cells other than the first pre-configured cell. For example: if the bit is set to 1, it indicates that pre-configured cells other than the first pre-configured cell should be released; if the bit is set to 0, it indicates that they should not be released. If the serving cell corresponds to three pre-configured cells, named candidatecell1, candidatecell2, and candidatecell3, and the first pre-configured cell is candidatecell1, then the second indication information can be used to indicate whether candidatecell2 and candidatecell3 should be released. Optionally, if the first command carries the identification of the pre-configured cell group, pre-configured cells other than the first pre-configured cell may also belong to the group of pre-configured cells corresponding to the identified group, such as a pre-configured cell group associated with the serving cell.

Third indication information: used to indicate whether to release configuration information in the first pre-configured cell other than the first configuration information; wherein the third indication information can consist of one bit to indicate whether to release configuration information other than the first configuration information in the first pre-configured cell. For example: if the bit is set to 1, it indicates the release of all configuration information other than the first configuration information; if the bit is set to 0, it indicates that no such configurations are to be released. Suppose the first pre-configured cell contains three configurations, named config1, config2, and config3, and config1 represents the first configuration information. The third indication information may specify whether config2 and config3 should be released. Optionally, if the first command includes configuration group identification information, configuration information outside of the first configuration information may also fall into a configuration group associated with the first pre-configured cell.

Fourth indication information: used to indicate whether to release the configuration information of source-activated pre-configured cells; wherein the fourth indication information can be represented by one bit to indicate whether to release the configuration information of source-activated pre-configured cells, meaning whether to release the configuration information applied by the serving cell prior to executing the first command. For example: if the bit is set to 1, it indicates the release of configuration information for the source-activated pre-configured cell; if the bit is set to 0, it means retaining such information. Optionally, if the first command contains configuration group identification information, the configuration information of the source-activated pre-configured cell can also be part of a relevant configuration group associated with the pre-configured cell.

The fifth indication information is used to indicate at least one configuration that needs to be released for the source-activated pre-configured cell; wherein, when it is necessary to release the configuration information of the source-activated pre-configured cell, the fifth indication information can further specify which specific configuration(s) of the source-activated pre-configured cell should be released. For example: each serving cell configures at least one pre-configured cell, and each pre-configured cell may contain at least one piece of configuration information. The fifth indication information can be the identifier of the configuration information to be released, or it can be a bitmap indicating the configuration information to be released. Optionally, if the first command carries configuration group identification information, at least one piece of configuration information to be released, corresponding to the source-activated pre-configured cell, may also belong to the configuration group associated with the source-activated pre-configured cell.

Identification information for the second pre-configured cell associated with at least one configuration needing release; wherein, when there is a need to release configuration information related to other pre-configured cells within the serving cell (e.g., one or more pre-configured cells), the corresponding pre-configured cell identification information can specify these cells. A bitmap can also serve this purpose. Optionally, if the first command includes pre-configured cell group identification, the second pre-configured cell may be from the identified group of cells, such as a pre-configured cell group associated with the serving cell.

The sixth indication information is used to indicate at least one configuration that needs to be released for the second pre-configured cell; wherein, when it is necessary to release the configuration information of other pre-configured cells (e.g., one or several pre-configured cells) in the serving cell, the sixth indication information can specifically indicate which configuration(s) of the pre-configured cell need to be released. For example: each serving cell configures at least one pre-configured cell, and each pre-configured cell may contain at least one piece of configuration information. The sixth indication information can either be the identifier of the configuration information to be released or a bitmap indicating the configuration information to be released. Optionally, if the first command carries configuration group identification information, at least one piece of configuration information to be released may also belong to the configuration group corresponding to the second pre-configured cell, wherein the configuration group is associated with the second pre-configured cell.

The seventh indication information is used to indicate at least one configuration that needs to be released for the first pre-configured cell; for example: if the first pre-configured cell contains multiple pieces of configuration information and certain pieces of configuration information need to be released, the seventh indication information can specifically indicate which configuration(s) need to be released. Optionally, if the first command carries configuration group identification information, at least one piece of configuration information to be released may also belong to the configuration group associated with the first pre-configured cell, wherein the configuration group is associated with the first pre-configured cell.

Identification information of pre-configured cell group: For example, when multiple pre-configured cells are configured for the UE, the network device divides these pre-configured cells into different groups, with each group containing at least one pre-configured cell. Each serving cell or group of serving cells can correspond to one or more groups of pre-configured cells. For instance, if the network device configures the UE with candCell1~candCell6, they can be divided into pre-configured cell group 1 (candCell1, candCell2), pre-configured cell group 2 (candCell3, candCell4, candCell5), and pre-configured cell group 3 (candCell6). In this case, serving cell 1 can correspond to pre-configured cell group 1, or both pre-configured cell group 1 and pre-configured cell group 3.

Configuration group identification information: For example, when multiple pieces of configuration information are configured for the UE, the network device divides them into different groups, with each group containing at least one piece of configuration information. Each pre-configured cell or group of pre-configured cells can correspond to one or more configuration groups. For instance, if the network device configures the UE with candConfig1~candConfig6, they can be divided into configuration group 1 (candConfig1, candConfig2), configuration group 2 (candConfig3, candConfig4), and configuration group 3 (candConfig5, candConfig6). In this case, pre-configured cell 1 or pre-configured cell group 1 can correspond to configuration group 1 or both configuration group 1 and configuration group 3. The configuration information contained in different configuration groups may vary. The first command can also activate specific configurations from different configuration groups, such as simultaneously activating the first configuration from configuration group 1 and the second configuration from configuration group 3. Configuration groups can also work in conjunction with the first indication information. Meanwhile, the first command may include at least one configuration group corresponding to the first indication information of the activated or applied target pre-configured cell of the target serving cell.

Identification information of serving cell group: For example, when multiple serving cells are configured for the UE, the network device divides them into different groups, with each group containing at least one serving cell. This division assists in associating and managing pre-configured cells or configuration information based on serving cells. Each serving cell or group of serving cells can correspond to one or more groups of pre-configured cell groups. For instance, if the network device configures the UE with ServCell1~ServCell3, they can be divided into serving cell group 1 (ServCell1, ServCell3) and serving cell group 2 (ServCell2). In this case, serving cell group 1 can correspond to pre-configured cell group 1 or both pre-configured cell group 1 and pre-configured cell group 3.

Identification information of cell group: This information is used to indicate the cell group corresponding to the serving cell. For example, a value of 0 could correspond to MCG (Master Cell Group).

Optionally, the terminal executes at least one of the following operations based on the first command:
activates or applies the target pre-configured cell corresponding to the serving cell;
activates or applies the target configuration information of the target pre-configured cell;
deactivates configuration information other than that of the target pre-configured cell;
deactivates configuration information corresponding to the target pre-configured cell other than the target configuration information;
applies the cell radio network temporary identifier (C-RNTI) corresponding to the target pre-configured cell;
maintains the serving cell state.

Here, the target pre-configured cell refers to the first pre-configured cell, and the target configuration information corresponds to the first configuration information.

For example: In cases where one or more pre-configured cells have been preset in each serving cell, and each pre-configured cell has been pre-configured with one piece of configuration information, if the first command includes the serving cell identification information and the identification information of the first pre-configured cell to activate or apply, the terminal can execute at least one of the above operations based on the first command. Alternatively, if one or more pre-configured cells have been preset in each serving cell and multiple pieces of configuration information have been pre-configured for each pre-configured cell, if the first command includes the serving cell identification information, the identification information of the first pre-configured cell to activate or apply, and the first indication information, the terminal can execute at least one of the above operations based on the first command.

Optionally, if the first command includes identification information of serving cell group, configuration group identification information, identification information of pre-configured cell group, and identification information of cell group, then the serving cell, pre-configured cells, and target configuration information are associated with the respective identification information of serving cell group, identification information of pre-configured cell group, configuration group identification information, and identification information of cell group. Optionally, maintaining the serving cell state means that the first command does not alter the serving cell state. For example, if the serving cell is a deactivated SCell, it will remain deactivated after executing the first command.

For another example: If the first command carries the serving cell identification information and the identification information of the first pre-configured cell to activate or apply, or if the first command carries the serving cell identification information, the identification information of the first pre-configured cell to activate or apply, and the first indication information, the terminal can execute the operations to activate or apply the target pre-configured cell of the serving cell or to activate or apply the target configuration information of the target pre-configured cell according to the first command. Optionally, if the first command carries second indication information, the terminal can release or retain pre-configured cells other than the first pre-configured cell based on the second indication information. If the first command carries third indication information, the terminal can release or retain configuration information corresponding to the first pre-configured cell other than the first configuration information based on the third indication information. If the first command carries fourth indication information, the terminal can release or retain the configuration information of the source-activated pre-configured cell based on the fourth indication information. If the first command carries fifth indication information, the terminal can release corresponding configuration information of the source-activated pre-configured cell based on the fifth indication information. If the first command carries the identification information of at least one secondary pre-configured cell whose configuration information needs to be released, the terminal can release the configuration information of the secondary pre-configured cell based on this identification information. If the first command carries sixth indication information, the terminal can release the corresponding configuration information of the secondary pre-configured cell based on the sixth indication information. If the first command carries seventh indication information, the terminal can release the corresponding configuration information of the first pre-configured cell based on the seventh indication information.

Optionally, if the first command includes identification information of serving cell group, configuration group identification information, identification information of pre-configured cell group, and identification information of cell group, the service operations correspond to the respective identification information of serving cell group, identification information of pre-configured cell group, configuration group identification information, and identification information of cell group.

It should be noted that if the serving cell identification information carried by the first command is in bitmap form, other information, apart from the serving cell identification information, corresponds one-to-one to the cells the bits of which in the bitmap are set to 1.

Optionally, the process in which the network device pre-configures the serving cell for the terminal may include the following steps:
Prior to the terminal receiving the first command sent by the network device, the terminal receives a second command from the network device. Based on the second command, the terminal determines the configuration information of the pre-configured cells corresponding to the serving cell.

The second command carries at least one of the following pieces of information:
Identification information of the serving cell;
Identification information of serving cell group;
Identification information of pre-configured cell group;
At least one pre-configured cell corresponding to the serving cell;
At least one configuration information of the pre-configured cells corresponding to the serving cell;
Configuration group identification information;
Tenth indication information, used to indicate the third pre-configured cell that is activated or applied;
Eleventh indication information, used to indicate the second configuration information of the third pre-configured cell that is activated or applied;
Correspondence between serving cells and serving cell groups;
Correspondence between pre-configured cells and pre-configured cell groups;
Correspondence between configuration information and configuration groups;
Association between serving cells or serving cell groups and pre-configured cell groups;
Association between pre-configured cells or pre-configured cell groups and configuration groups.

Optionally, the second command is radio resource control signaling.

For example: If the second command carries at least one piece of information among the serving cell's identification information, at least one pre-configured cell corresponding to the serving cell, and at least one configuration information of the pre-configured cell corresponding to the serving cell, then the terminal, based on the second command, stores the configuration information of the pre-configured cells corresponding to the serving cell or stores the configuration information corresponding to these pre-configured cells. Optionally, the second command includes identification information of serving cell group, which can indicate the serving cell group to which the serving cell belongs. It can also include identification information of pre-configured cell group, which can indicate the pre-configured cell group associated with the serving cell. Furthermore, the second command may include configuration group identification information to specify the configuration group associated with the configuration information. Optionally, the second command can carry at least one of the following: correlation between serving cells and serving cell groups, pre-configured cells and pre-configured cell groups, configuration information and configuration groups, associations between serving cell groups (or serving cells) and pre-configured cell groups, and associations between pre-configured cells (or pre-configured cell groups) and configuration groups. The UE will store the relevant correlations. For example, regarding the correlation between serving cells and serving cell groups, it specifies which serving cells are included in each serving cell group. Similarly, for the association between serving cells or serving cell groups and pre-configured cell groups, it specifies which pre-configured cell groups are associated with each serving cell or serving cell group, i.e., the applicable pre-configured cell corresponds to the pre-configured cell group.

Additionally, for example: If the second command carries the tenth and/or eleventh indication information, while configuring the pre-configured cells of the serving cell, it can also specify the configuration information of the initially activated or applied pre-configured cell. Here, the third pre-configured cell might be indicated to the UE using pre-configured cell identification information and/or identification information of pre-configured cell group. Similarly, the second configuration information might be provided to the UE using configuration information indication and/or pre-configuration group identification information. In such cases, the terminal can execute at least one of the following operations based on the second command:
Activate or apply the target pre-configured cell corresponding to the serving cell;
Activate or apply the target configuration information of the target pre-configured cell;
Deactivate configuration information of pre-configured cells other than the target pre-configured cell;
Deactivate configuration information corresponding to the target pre-configured cell other than the target configuration information;
Apply the C-RNTI corresponding to the target pre-configured cell;
Maintain the state of the serving cell.

Here, the target pre-configured cell refers to the third pre-configured cell, and the target configuration information refers to the second configuration information.

Optionally, the first command also includes the first information required to activate the serving cell; the first information includes at least one of the following:
TCI information; for example: downlink TCI, unified TCI applied to both uplink and downlink, uplink TCI, or both uplink and downlink TCIs.

Activated uplink spatial division relationships;
Identification information of the downlink BWP; for example: the activated downlink BWP could correspond to the active downlink BWP of the configuration information of the first pre-configured cell that the first command instructs the serving cell to activate or apply. Using this downlink BWP, the terminal can perform RLM or beam management (e.g., BFD).

Identification information of the uplink BWP; for example: the uplink BWP to activate can correspond to the active uplink BWP of the configuration information of the first pre-configured cell that the first command instructs the serving cell to activate or apply.

Eighth indication information, used to indicate RLM RS;
Ninth indication information, used to indicate BFD RS.

Optionally, if the first command includes the first information, the terminal, based on the first information, further performs at least one of the following operations:
Activate the TCI;
Activate the uplink spatial division relationships;
Activate the downlink BWP;
Activate the uplink BWP;
Restart or stop the BFD-related timers;
Reset BFD-related counters;
Apply the BFD RS;
Apply the RLM RS;
Reset RLM-related counters; for example, when the serving cell is the SpCell;
Restart or stop the RLM-related timers, for example, when the RLM-related timers are running, and the serving cell is the SpCell.

For instance: If the terminal, based on the first command, activates at least one of the TCI, uplink spatial division relationships, downlink BWP, and uplink BWP, it simultaneously deactivates TCIs, BWPs, etc., other than those specified by the indication information.

Another example: If the first command does not include the first information, after receiving the first command, the UE applies the BWP, TCI, and/or uplink spatial division relationships that were applied in the serving cell before the first command was received, or it activates or applies the BWP corresponding to the first active BWP ID configured within the configuration information carried.

Optionally, the serving cell management method also includes:
The terminal receives a third command sent by the network device; based on the third command, the terminal updates the configuration information of the pre-configured cells corresponding to the serving cell.

The third command carries at least one of the following pieces of information:
Identification information of the serving cell;
Identification information of the serving cell group;
Identification information of pre-configured cell group;
Twelfth indication information, used to indicate adding, modifying, or releasing the pre-configured cells associated with the serving cell or serving cell group;
Thirteenth indication information, used to indicate adding, modifying, or releasing the pre-configured cell groups associated with the serving cell or serving cell group;
Fourteenth indication information, used to indicate adding, modifying, or releasing the configuration information associated with the pre-configured cells or pre-configured cell groups;
Fifteenth indication information, used to indicate adding, modifying, or releasing the configuration groups associated with the pre-configured cells or pre-configured cell groups;
Sixteenth indication information, used to indicate adding, modifying, or releasing the serving cell groups.

Optionally, the third command is radio resource control signaling.

In this embodiment, when the network device configures the pre-configured cell configuration information corresponding to the serving cell for the terminal, the network device can further update the configuration information of the pre-configured cell corresponding to the serving cell, such as modifying, releasing, or adding the configuration information of the corresponding pre-configured cell. In this case, there are no restrictions on the timing between the third command and the first command. For example, the third command, which is used to update the configuration information of the pre-configured cell corresponding to the serving cell, may be executed after configuring the pre-configured cell configuration information corresponding to the serving cell. Similarly, the first command, which is used to perform serving cell management, may also be executed after the configuration of the pre-configured cell configuration information corresponding to the serving cell. When performing serving cell management based on the first command, it may rely on either the pre-configured configuration information of the pre-configured cell corresponding to the serving cell or the updated configuration information of the pre-configured cell corresponding to the serving cell.

Optionally, the third command may use the sixteenth indication information to manage at least one of addition, modification, or release of serving cells within a serving cell group. Optionally, it may also use the fifteenth indication information to manage at least one of addition, modification, or release of each pre-configured cell or each configuration group corresponding to each pre-configured cell. Optionally, it may use the fourteenth indication information to manage at least one of addition, modification, or release of each pre-configured cell or each piece of configuration information corresponding to each pre-configured cell. Optionally, it may use the thirteenth indication information to manage addition, modification, or release of the pre-configured cell groups corresponding to each serving cell or each serving cell group. Optionally, it may use the twelfth indication information to manage at least one of addition, modification, or release of the pre-configured cells corresponding to each serving cell or each serving cell group.

In the embodiments disclosed herein, the network device can send Layer 1 or Layer 2 commands to the UE, wherein the Layer 1 or Layer 2 commands contain the corresponding serving cell information indicating the command to be executed, as well as the indication information for the specific configuration information of the pre-configured cell that the serving cell should apply or activate. The UE applies or activates the configuration information of the designated pre-configured cell corresponding to the serving cell. The network device can configure at least one piece of configuration information for pre-configured cells for each serving cell. The network can add, modify, or release the configuration information of the pre-configured cells corresponding to each serving cell, enabling the network device to notify the UE to perform serving cell management by sending Layer 1 or Layer 2 commands.

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as UE. A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, a Personal Digital Assistant (PDA), a Reduced Capability (Redcap) terminal, a smart appliance terminal, a vehicle-mounted terminal or a robot. In addition, the wireless terminal device may also be called as system, subscriber unit, subscriber station, mobile station, mobile, remote station, remote terminal, access terminal, user terminal, user agent or user device, which will not be particularly defined herein.

As shown in Figure 2, the present disclosure also provides a method for managing a serving cell, including the following steps:
Step 21: The network device sends a first command to the terminal; wherein the first command is used to instruct the terminal to perform serving cell management based on the configuration information of the pre-configured cell corresponding to the serving cell.

Optionally, the first command carries at least one of the following pieces of information:
Identification information of the serving cell;
Identification information of the first pre-configured cell to activate or apply;
First indication information, used to indicate the first configuration information of the first pre-configured cell to activate or apply;
Second indication information, used to indicate whether to release pre-configured cells other than the first pre-configured cell;
Third indication information, used to indicate whether to release configuration information corresponding to the first pre-configured cell other than the first configuration information;
Fourth indication information, used to indicate whether to release the configuration information of the source-activated pre-configured cell;
Fifth indication information, used to indicate at least one configuration information to be released corresponding to the source-activated pre-configured cell;
Identification information of at least one secondary pre-configured cell whose configuration information needs to be released;
Sixth indication information, used to indicate at least one configuration information of the secondary pre-configured cell that needs to be released;
Seventh indication information, used to indicate at least one configuration information of the first pre-configured cell that needs to be released;
Identification information of pre-configured cell group;
Configuration group identification information;
Identification information of serving cell group;
Identification information of cell group.

Optionally, the first command also carries the first information required to activate the serving cell; wherein the first information includes at least one of the following:
Activated Transmission Configuration Indication (TCI) information;
Activated uplink spatial division relationship;
Identification information of the Downlink Bandwidth Part (BWP);
Identification information of the uplink BWP;
Eighth indication information, used to indicate the activated Radio Link Monitoring (RLM) reference signal (RS);
Ninth indication information, used to indicate the activated Beam Failure Detection (BFD) reference signal (RS).

Optionally, the first command is a physical layer command or a Medium Access Control-Control Element (MAC-CE) command.

Optionally, the serving cell is at least one of the following:
A special cell (SpCell);
An activated secondary cell (SCell);
A secondary cell in dormant mode.

Optionally, before the network device sends the first command to the terminal, the following may also be included:
The network device sends a second command to the terminal, which is used to determine the configuration information of the pre-configured cell corresponding to the serving cell; wherein the second command carries at least one of the following pieces of information:
Identification information of the serving cell;
Identification information of pre-configured cell group;
Identification information of serving cell group;
Configuration group identification information;
At least one pre-configured cell corresponding to the serving cell;
At least one piece of configuration information of the pre-configured cell corresponding to the serving cell;
Tenth indication information, used to indicate the third pre-configured cell to activate or apply;
Eleventh indication information, used to indicate the second configuration information of the third pre-configured cell to activate or apply;
Correspondence between serving cells and serving cell groups;
Correspondence between pre-configured cells and pre-configured cell groups;
Correspondence between configuration information and configuration groups;
Associations between serving cells or serving cell groups and pre-configured cell groups;
Associations between pre-configured cells or pre-configured cell groups and configuration groups.

Optionally, the method for managing the serving cell further includes:
The network device sends a third command to the terminal, and the third command is used to update the configuration information of the pre-configured cell corresponding to the serving cell; wherein the third command carries at least one of the following pieces of information:
Identification information of the serving cell;
Identification information of the serving cell group;
Identification information of pre-configured cell group;
Twelfth indication information, used to indicate at least one of adding, modifying, or releasing the pre-configured cells associated with the serving cell or serving cell group;
Thirteenth indication information, used to indicate at least one of adding, modifying, or releasing the pre-configured cell groups associated with the serving cell or serving cell group;
Fourteenth indication information, used to indicate at least one of adding, modifying, or releasing the configuration information associated with the pre-configured cells or pre-configured cell groups;
Fifteenth indication information, used to indicate at least one of adding, modifying, or releasing the configuration groups associated with the pre-configured cells or pre-configured cell groups;
Sixteenth indication information, used to indicate at least one of adding, modifying, or releasing the serving cell groups.

Optionally, the second command and/or the third command is radio resource control (RRC) signaling.

In the embodiments of the present disclosure, the serving cell management method on the network device side corresponds to the serving cell management method on the terminal side described above. The respective embodiments can refer to each other and achieve similar technical effects. To avoid repetition, they are not elaborated here.

The network device involved in the embodiments of the present application may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of this application may be a network device(Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB),a relay node (relay node), a femto (femto), a pico (pico), etc., which is not limited in the embodiments of this application. In some network structures, the network device may include a centralized unit (centralized unit, CU) node and a distributed unit (distributed unit, DU) node, and the centralized unit and the distributed unit may be geographically separated.

The following describes the serving cell management method involving interaction between the terminal side and the network device side in the present disclosure using specific embodiments:
Embodiment 1: The network device notifies the UE to perform serving cell management via Layer 1 or Layer 2 commands.

Step 1: The network device side configures serving cells cell0 and cell1, with serving cell identifiers of 0 and 1 for the UE respectively. Pre-configured cell configuration information for cell0 includes config1, config2, and config3; for cell1, it includes config1 and config2. Here, cell0 is the SpCell, while cell1 is an SCell. Currently, config1 is applied for the pre-configured cell in cell0, and config2 is applied for the pre-configured cell in cell1.

Step 2: When the network device decides to update the configuration information of the pre-configured cells to be applied or activated in cell0 and cell1, it can send a first command to notify the UE to change the application or activation of the pre-configured cell's configuration information. The first command may be a MAC Control Element (MAC CE) or Downlink Control Information (DCI).

Manner 1: A command is sent for each serving cell separately to indicate the configuration information of the activated pre-configured cell; that is, the first command is for specific serving cells. Taking cell0 as an example, the first command contains at least one of the following:
Identification information of the serving cell: For example, for cell0, the identifier is 0.

First indication information, used to indicate the first configuration information of the first pre-configured cell to activate or apply; for example, if config2 is the target, its identifier is 2.

Third indication information, used to indicate whether to release configuration information corresponding to the first pre-configured cell other than the first configuration information. For instance:
If the first command carries this third indication information, the UE releases config1 and config3.

Alternatively, if the third indication information also includes "identification information of the configuration to be released," the UE only releases the configuration corresponding to this identifier.

Fourth indication information, used to indicate whether to release the configuration information of the source-activated pre-configured cell. For example, if the first command carries this fourth indication information, the UE releases config1.

Seventh indication information, used to indicate at least one piece of configuration information of the first pre-configured cell to be released; for example, if config3 is specified, the UE releases config3 based on the seventh indication information.

TCI information to activate: Includes downlink TCI, unified TCI applied to both uplink and downlink, uplink TCI, or both uplink and downlink TCIs.

Activated uplink spatial division relationship.

Identification information of the downlink BWP to activate: For example, the activated downlink BWP may correspond to the active downlink BWP of the configuration information of the first pre-configured cell that the first command instructs the serving cell to activate or apply. The terminal can use this downlink BWP for corresponding RLM or beam management tasks (e.g., BFD).

Identification information of the uplink BWP to activate: For example, the uplink BWP to activate may correspond to the active uplink BWP of the configuration information of the first pre-configured cell that the first command instructs the serving cell to activate or apply.

BFD RS to activate indication information.

RLM RS to activate indication information.

Identification information of cell group: For example, a value of 0 corresponds to the Master Cell Group (MCG).

Manner 2: A single command is sent containing relevant indication information for activating the pre-configured cells of both cell0 and cell1 simultaneously. That is, the command may include multiple cells. The first command contains at least one of the following:
Serving cell identification information: For example, the cell identifier for cell0 is 0, and for cell1, it is 1. This can also be implemented using a bitmap, where each bit corresponds to a serving cell. If the bit for a serving cell is set to 1, the command applies to that cell; otherwise, it does not. In this case, the bits for cell0 and cell1 are set to 1.

Identification information of cell group: For example, the cell group corresponding to the serving cell. A value of 0 may indicate the MCG.

The following information corresponds one-to-one with the above serving cells, i.e., cell0 and cell1. Below is an example for cell0 where the first command carries at least one of the following:
First indication information, used to indicate the first configuration information of the first pre-configured cell to activate or apply; for example, if config2 is the target, its identifier is 2.

Third indication information, used to indicate whether to release configuration information corresponding to the first pre-configured cell other than the first configuration information. For instance:
If the first command carries this third indication information, the UE releases config1 and config3.

Alternatively, if the third indication information also includes "identification information of the configuration to be released," the UE only releases the configuration corresponding to this identifier.

Fourth indication information, used to indicate whether to release the configuration information of the source-activated pre-configured cell. For example, if the first command carries this fourth indication information, the UE releases config1.

Seventh indication information, used to indicate at least one piece of configuration information of the first pre-configured cell to be released; for example, if config3 is specified, the UE releases config3 based on the seventh indication information.

TCI information to activate: Includes downlink TCI, unified TCI applied to both uplink and downlink, uplink TCI, or both uplink and downlink TCIs.

Activated uplink spatial division relationship.

Identification information of the downlink BWP to activate: For example, the activated downlink BWP may correspond to the active downlink BWP of the configuration information of the first pre-configured cell that the first command instructs the serving cell to activate or apply. The terminal can use this downlink BWP for corresponding RLM or beam management tasks (e.g., BFD).

Identification information of the uplink BWP to activate: For example, the uplink BWP to activate may correspond to the active uplink BWP of the configuration information of the first pre-configured cell that the first command instructs the serving cell to activate or apply.

BFD RS to activate indication information.

RLM RS to activate indication information.

Identification information of cell group: For example, a value of 0 corresponds to the Master Cell Group (MCG).

Step 3: After the UE receives the first command sent by the network device, taking cell0 as an example, it performs at least one of the following operations:
Activates or applies the first configuration information of the first pre-configured cell corresponding to the serving cell, i.e., activates config2 or applies config2.

Activates the corresponding TCI, uplink spatial division relationship, BWP, etc.

Resets BFD-related timers and constants.

Applies the corresponding BFD and/or RLM RS.

Stores or deactivates the configuration information of pre-configured cells other than the first pre-configured cell; for example, deactivates config1 while saving config1.

Applies the corresponding C-RNTI, such as applying the C-RNTI corresponding to config2.

If the serving cell is SpCell, it resets RLM-related counters, i.e., resets related counters to zero.

If the serving cell is SpCell and T310/T312 is running, it restarts or stops RLM-related timers T310 and/or T312.

For cell1, because it is not SpCell, the UE does not need to reset RLM-related counters or restart or stop RLM-related timers T310 and/or T312. Other operations are similar to those of cell0, which will not be repeated here.

Maintains the state of the serving cell. For example, in the case of cell1, if the cell is in a deactivated state, it continues to maintain the deactivated state.

Embodiment 2: Based on Embodiment 1, each pre-configured cell can configure at least one piece of configuration information in this scenario.

Step 1: The network device side configures serving cells cell0 and cell1, with serving cell identifiers of 0 and 1 for the UE respectively. Taking cell0 as an example, cell0 is configured with pre-configured cells candidateCell1, candidateCell2, and candidateCell3, where each pre-configured cell contains three sets of configuration information, labeled config1, config2, and config3. The currently activated pre-configured cell is candidateCell1, and the activated or applied configuration information is config1 of candidateCell1.

Step 2: When the network device decides to update the configuration information of the pre-configured cell to be applied or activated for cell0, it can send a first command to notify the UE to change the application of the pre-configured cell's configuration information. The first command may be a MAC CE or DCI. Similar to Embodiment 1, the first command can be sent through two methods: the first command is for each cell, or it can configure multiple serving cells simultaneously. This will not be repeated here. Taking Method 1 as an example, the first command contains at least the following:
Identification information of the serving cell; for example, for cell0, the identifier is 0.

Identification information of the first pre-configured cell to activate or apply; for example, for candidateCell2, the identifier is 2.

First indication information, used to indicate the first configuration information of the first pre-configured cell to activate or apply; for example, for config1, the first indication information is 1.

Second indication information, used to indicate whether to release pre-configured cells other than the first pre-configured cell; for instance, if the first command carries the second indication information, the UE releases candidateCell1 and candidateCell3. Alternatively, if the second indication information also includes "identification information of the pre-configured cell to be released," the UE releases the pre-configured cell corresponding to the specified identifier.

Fourth indication information, used to indicate whether to release the configuration information of the source-activated pre-configured cell; for example, if the first command carries the fourth indication information, the UE releases candidateCell1 or releases the source-activated configuration of candidateCell1, which is config1 in this case.

Fifth indication information, used to indicate at least one configuration information of the source-activated pre-configured cell that needs to be released; for example, if config1 of candidateCell1 needs to be released, the fifth indication information is 1. It can also release multiple configuration files simultaneously, such as config1 and config2. In this case, the fifth indication information can be represented as configuration information identifiers (1 and 2) or using a bitmap indicating the configuration information to be released, where the bitmap for config1 and config2 corresponds to 1.

Identification information of at least one secondary pre-configured cell whose configuration information needs to be released; for example, candidateCell3-here, the UE releases candidateCell3.

Sixth indication information, used to indicate at least one configuration information of the secondary pre-configured cell to be released; for instance, if config1 of candidateCell3 needs to be released, the sixth indication information is 1. It can also release multiple configurations simultaneously, such as config1 and config2. In this case, the sixth indication information can be represented as configuration information identifiers (1 and 2) or using a bitmap indicating the configuration information to be released, where the bitmap for config1 and config2 corresponds to 1.

TCI information; for example, including downlink TCI, unified TCI applied to both uplink and downlink, uplink TCI, or both uplink and downlink TCIs.

Activated uplink spatial division relationship.

Identification information of the downlink BWP; for example, the activated downlink BWP may correspond to the active downlink BWP of the configuration information of the first pre-configured cell that the first command instructs the serving cell to activate or apply. The terminal can use this downlink BWP for corresponding RLM or beam management tasks (e.g., BFD).

Identification information of the uplink BWP; for example, the uplink BWP to activate may correspond to the active uplink BWP of the configuration information of the first pre-configured cell that the first command instructs the serving cell to activate or apply.

BFD RS to activate indication information.

RLM RS to activate indication information.

Identification information of cell group; for example, a value of 0 corresponds to MCG.

Step 3: After the UE receives the first command sent by the network device, taking cell0 as an example, it performs at least one of the following operations:

Activates or applies the first configuration information of the first pre-configured cell corresponding to the serving cell, i.e., activates candidateCell2 or applies config1 of candidateCell2.

Activates the corresponding TCI, uplink spatial division relationship, BWP, etc.

Resets BFD-related timers and constants.

Applies the corresponding BFD and/or RLM RS.

Stores or deactivates pre-configured cells other than the first pre-configured cell; for instance, deactivates candidateCell1/3 while saving candidateCell1/3.

Stores or deactivates configuration information other than the first configuration information of the first pre-configured cell; for example, stores or deactivates config2 and config3 of candidateCell2.

Applies the corresponding C-RNTI; for example, applies the C-RNTI corresponding to config2.

Embodiment 3: The network device notifies the UE to perform serving cell management via Layer 1 or Layer 2 commands.

Step 1: The network device side configures serving cells cell0, cell1, and cell2 and candCell0~candCell5 for the UE, which are divided into pre-configured cell group 1 (candCell0, candCell1), pre-configured cell group 2 (candCell2, candCell3, candCell4), and pre-configured cell group 3 (candCell5). Here, cell0 corresponds to pre-configured cell group 1, cell1 corresponds to pre-configured cell groups 2 and 3, and cell2 corresponds to pre-configured cell group 1.

Alternatively, the network device configures the UE with serving cells cell0~cell2, dividing them into serving cell group 1 (cell0, cell2) and serving cell group 2 (cell1), where serving cell group 1 corresponds to pre-configured cell group 1, and serving cell group 2 corresponds to pre-configured cell groups 2 and 3.

Alternatively, the network device configures the UE with candConfig0~candConfig5, dividing them into configuration group 1 (candConfig0, candConfig1), configuration group 2 (candConfig2, candConfig3), and configuration group 3 (candConfig14, candConfig5), where pre-configured cell 0/1 or pre-configured cell group 1 corresponds to configuration group 1, and pre-configured cells 2/3/4/5 or pre-configured cell groups 2/3 correspond to configuration groups 2 and 3.

Here, the configuration information currently applied to the pre-configured cell 1 or the pre-configured cell group 1 by cell0 is candConfig1, the configuration information currently applied to the pre-configured cell 2 or the pre-configured cell group 2 by cell1 is candConfig4, and the configuration information currently applied to the pre-configured cell 2 or the pre-configured cell group 1 by cell2 is candConfig0. The configuration information to be applied to the pre-configured cell 0 or the pre-configured cell group 1 by cell0 is candConfig0.

Step 2: When the network device decides to update the configuration information of the pre-configured cells to be applied or activated for at least one of cell0~cell3, it can send a first command to notify the UE to change the application or activation of pre-configured cell configuration information. The first command may be MAC CE or DCI.

When the network device decides to update the configuration information of the pre-configured cells to be applied or activated for at least one of cell0~cell2, it can send a first command to notify the UE to change the application of pre-configured cell configuration information. The first command may be MAC CE or DCI. Similar to Embodiment 1, the first command can be sent in two ways, i.e., the first command targets each cell individually or configures multiple serving cells simultaneously. This will not be repeated here. Taking cell0 as an example, the first command contains at least the following:
Identification information of the serving cell; for example, for cell0, the identifier is 0.

Identification information of the serving cell group; for example, for serving cell group 1 corresponding to cell0, the identifier is 1.

Identification information of the first pre-configured cell to activate or apply; for example, for candCell0, the identifier is 0.

Identification information of pre-configured cell group; for example, for pre-configured cell group 1 corresponding to candCell0, the identifier is 1.

First indication information, used to indicate the first configuration information of the first pre-configured cell to activate or apply; for example, for candConfig0, the first indication information is 0.

Configuration group identification information; for example, for configuration group 1 corresponding to candConfig0, the identifier is 1.

Second indication information, used to indicate whether to release pre-configured cells other than the first pre-configured cell; for instance, if the first command carries this second indication information, the UE releases candCell1~5. Alternatively, if the second indication information also includes "identification information of the pre-configured cells to be released," the UE releases the pre-configured cells corresponding to the given identifiers. Or, the UE releases pre-configured cells in the same pre-configured cell group as the first pre-configured cell, except for the first pre-configured cell itself.

Fourth indication information, used to indicate whether to release configuration information of the source-activated pre-configured cell; for example, if the first command carries this fourth indication information, the UE releases candCell1 or the source-activated configuration of candCell1, which is candConfig1 in this case.

Fifth indication information, used to indicate at least one piece of configuration information of the source-activated pre-configured cell that needs to be released; for example, if candConfig1 of candCell1 needs to be released, the fifth indication information is 1. The fifth indication information may specify configuration information as identifiers, such as 1, or use a bitmap where candConfig1 corresponds to 1.

Identification information of at least one secondary pre-configured cell whose configuration information needs to be released; for example, for candCell3, the UE releases candCell3.

Sixth indication information, used to indicate at least one piece of configuration information of the secondary pre-configured cell that needs to be released; for example, if candConfig4 of candCell3 needs to be released, the sixth indication information is 4. It can also release multiple configurations simultaneously, such as candConfig2 and candConfig4, where the sixth indication information may specify configuration information identifiers (2 and 4) or use a bitmap corresponding to candConfig2 and candConfig4 as 1.

TCI information; for example, including downlink TCI, unified TCI applied to both uplink and downlink, uplink TCI, or both uplink and downlink TCIs.

Activated uplink spatial division relationship.

Identification information of the downlink BWP; for example, the activated downlink BWP may correspond to the active downlink BWP of the configuration information of the first pre-configured cell that the first command instructs the serving cell to activate or apply. The terminal can use this downlink BWP for corresponding RLM or beam management tasks (e.g., BFD).

Identification information of the uplink BWP; for example, the uplink BWP to activate may correspond to the active uplink BWP of the configuration information of the first pre-configured cell that the first command instructs the serving cell to activate or apply.

BFD RS to activate indication information.

RLM RS to activate indication information.

Identification information of cell group; for example, a value of 0 corresponds to MCG.

Step 3: After the UE receives the first command sent by the network device, taking cell0 as an example, it performs at least one of the following operations:
Activates or applies the first configuration information of the first pre-configured cell corresponding to the serving cell, i.e., activates candCell0 or applies candConfig0 of candCell0.

Activates the corresponding TCI, uplink spatial division relationship, BWP, etc.

Resets BFD-related timers and constants.

Applies the corresponding BFD and/or RLM RS.

Stores or deactivates pre-configured cells other than the first pre-configured cell; for example, deactivates candCell1~5 or stores candCell1~5, or deactivates pre-configured cell groups 2/3.

Stores or deactivates configuration information other than the first configuration information of the first pre-configured cell; for example, stores or deactivates candConfig1 of candCell0.

Applies the corresponding C-RNTI; for example, applies the C-RNTI corresponding to config2.

Embodiment 4: The network device configures pre-configured cells through RRC signaling.

Step 1: The network device sends a second command to configure at least one serving cell for the UE; taking cell0 and cell1 as examples, at least one pre-configured cell is configured for each serving cell. Taking cell0 as an example, the pre-configured cells candidateCell1 and candidateCell2 are configured for cell0.

Optionally, candidateCell1 corresponds to one piece of configuration information, such as config1.

Optionally, candidateCell1 is configured with multiple sets of configuration information, such as config1, config2, and config3.

The second command may also include the following information:
Identification information of the serving cell; for example, the identifier of cell0 is 0.

Tenth indication information, used to indicate the third pre-configured cell to activate or apply; for example, candidateCell1 corresponds to the tenth indication information, which is 1.

Eleventh indication information, used to indicate the second configuration information of the third pre-configured cell to activate or apply; for example, config2 corresponds to the eleventh indication information, which is 2.

Step 2: After receiving the second command, the UE performs at least one of the following operations for cell0:
Stores the corresponding configuration information.

Activates the configuration information corresponding to candidateCell1 configured for cell0.

If the tenth and/or eleventh indication information is included, activates config2 of candidateCelll.

Deactivates the configuration information of other pre-configured cells, such as deactivating candidateCell2.

Deactivates config1 and config3 of candidateCell1, etc.

Embodiment 5: The network device configures pre-configured cells through RRC signaling.

Step 1: The network device side configures serving cells cell0, cell1, and cell2 and candCell0~candCell5 for the UE, which are divided into pre-configured cell group 1 (candCell0, candCell1), pre-configured cell group 2 (candCell2, candCell3, candCell4), and pre-configured cell group 3 (candCell5). Here, cell0 corresponds to pre-configured cell group 1, cell1 corresponds to pre-configured cell groups 2 and 3, and cell2 corresponds to pre-configured cell group 1. Alternatively, the network device configures serving cells cell0~cell2 for the UE, dividing them into serving cell group 1 (cell0, cell2) and serving cell group 2 (cell1), where serving cell group 1 corresponds to pre-configured cell group 1, and serving cell group 2 corresponds to pre-configured cell groups 2 and 3. Alternatively, the network device configures candConfig0~candConfig5 for the UE, dividing them into configuration group 1 (candConfig0, candConfig1), configuration group 2 (candConfig2, candConfig3), and configuration group 3 (candConfig14, candConfig5), where pre-configured cell 0/1 or pre-configured cell group 1 corresponds to configuration group 1, and pre-configured cells 2/3/4/5 or pre-configured cell groups 2/3 correspond to configuration groups 2 and 3.

Here, the configuration information currently applied to the pre-configured cell 1 or the pre-configured cell group 1 by cell0 is candConfig1, the configuration information currently applied to the pre-configured cell 2 or the pre-configured cell group 2 by cell1 is candConfig4, and the configuration information currently applied to the pre-configured cell 2 or the pre-configured cell group 1 by cell2 is candConfig0.

The second command may include the following information:

Identification information of the serving cell; for example, for cell0, the identifier is 0.

Identification information of serving cell group; for example, for serving cell group 1 where cell0 belongs, the identifier is 1.

Identification information of pre-configured cell group; for example, for pre-configured cell group 1 corresponding to cell0, the identifier is 1.

At least one pre-configured cell corresponding to the serving cell; for example, for candCell0 and candCell1 corresponding to cell0, the identifiers are 0 and 1.

At least one configuration information of the pre-configured cells corresponding to the serving cell; for example, for candCell0 (pre-configured cell 0) corresponding to candConfig0, it is 0; for candCell1 (pre-configured cell 1) corresponding to candConfig1, it is 1.

Configuration group identification information; for example, for configuration group 1 corresponding to cell0 or pre-configured cell group 1, the identifier is 1.

Tenth indication information, used to indicate the third pre-configured cell to activate or apply; for example, for candCell1, the tenth indication information is 1.

Eleventh indication information, used to indicate the second configuration information of the third pre-configured cell to activate or apply; for example, for candConfig1, the eleventh indication information is 1.

Correspondence between serving cells and serving cell groups; for example, serving cell group 1 (cellO, cell2), serving cell group 2 (cell1).

Correspondence between pre-configured cells and pre-configured cell groups; for example, pre-configured cell group 1 (candCell0, candCell1), pre-configured cell group 2 (candCell2, candCell3, candCell4), pre-configured cell group 3 (candCell5).

Correspondence between configuration information and configuration groups; for example, configuration group 1 (candConfig0, candConfig1), configuration group 2 (candConfig2, candConfig3), configuration group 3 (candConfig14, candConfig5).

Association between serving cell groups or serving cells and pre-configured cell groups; for example, serving cell group 1 corresponds to pre-configured cell group 1, serving cell group 2 corresponds to pre-configured cell groups 2 and 3.

Association between pre-configured cells or pre-configured cell groups and configuration groups; for example, pre-configured cell 0/1 or pre-configured cell group 1 corresponds to configuration group 1, pre-configured cells 2/3/4/5 or pre-configured cell groups 2/3 correspond to configuration groups 2 and 3.

Step 2: After receiving the second command, the UE can store the above configuration information, and/or apply or activate the configuration information of the corresponding pre-configured cells of the serving cell, and/or deactivate or release the configuration information of other pre-configured cells, etc.

Embodiment 6: The network device maintains pre-configured cells through RRC signaling.

Step 1: The network device sends a second command to configure at least one serving cell for the UE; taking cell0 and cell1 as examples, at least one pre-configured cell is configured for each serving cell. Taking cell0 as an example, the pre-configured cells candidateCell1 and candidateCell2 are configured for cell0.

Optionally, candidateCell1 corresponds to one piece of configuration information, such as config1.

Optionally, candidateCell1 is configured with multiple pieces of configuration information, such as config1, config2, and config3.

Step 2: The network device sends a third command to maintain pre-configured cells; the third command may contain at least one of the following:
Fourteenth indication information, used to indicate the configuration information of the pre-configured cells that need to be added to the serving cell or pre-configured cell group. For example, if configuration information for serving cell cell3 needs to be added, taking cell3 as an example, cell3 includes pre-configured cell configuration information similar to cell0 and cell1, which will not be repeated here.

Twelfth indication information, used to indicate the configuration information of the pre-configured cells that need to be modified for the serving cell or pre-configured cell group. For example, if the configuration information of serving cell cell0 needs to be modified, such as deleting candidateCell1, or adding candidateCell4, or modifying candidateCell2. "Modifying candidateCell2" includes modifying the configuration information of candidateCell2 or adding, modifying, or releasing its configuration information, such as deleting config2, modifying config1, or adding config4, etc.

Thirteenth indication information, used to indicate the configuration information of the pre-configured cells that need to be released for the serving cell or pre-configured cell group. For example, releasing the configuration information of serving cell cell1.

Step 3: After receiving the third command, the UE performs at least one of the following operations:
Stores the configuration information for serving cell 3, i.e., cell3.

Modifies the configuration information for serving cell cellO; for example, deletes candidateCell1, adds candidateCell4, or modifies candidateCell2. Modification includes modifying the configuration information of candidateCell2 or adding, modifying, or releasing its configuration information, such as deleting config2, modifying config1, or adding config4, etc.

Deletes the configuration information for serving cell cell1.

Embodiment 7: The network device maintains pre-configured cells through RRC signaling.

Step 1: The network device side configures serving cells cell0, cell1, and cell2 and candCell0~candCell5 for the UE, which are divided into pre-configured cell group 1 (candCell0, candCell1), pre-configured cell group 2 (candCell2, candCell3, candCell4), and pre-configured cell group 3 (candCell5). Here, cell0 corresponds to pre-configured cell group 1, cell1 corresponds to pre-configured cell groups 2 and 3, and cell2 corresponds to pre-configured cell group 1.

Alternatively, the network device configures serving cells cell0~cell2 for the UE, dividing them into serving cell group 1 (cellO, cell2) and serving cell group 2 (cell1), where serving cell group 1 corresponds to pre-configured cell group 1, and serving cell group 2 corresponds to pre-configured cell groups 2 and 3.

Alternatively, the network device configures candConfig0~candConfig5 for the UE, dividing them into configuration group 1 (candConfig0, candConfig1), configuration group 2 (candConfig2, candConfig3), and configuration group 3 (candConfig14, candConfig5), where pre-configured cell 0/1 or pre-configured cell group 1 corresponds to configuration group 1, and pre-configured cells 2/3/4/5 or pre-configured cell groups 2/3 correspond to configuration groups 2 and 3.

Here, the configuration information currently applied by cell0 is candConfig1 which is corresponding to the pre-configured cell candCell1 or the pre-configured cell group 1 , the configuration information currently applied by cell1 is candConfig4 which is corresponding to the pre-configured cell candCell3 or the pre-configured cell group 2 , and the configuration information currently applied by cell2 is candConfig0 which is corresponding to the pre-configured cell candCell2 or the pre-configured cell group 1.

Step 2: The network device sends a third command to maintain pre-configured cells; the third command may contain at least one of the following:
Identification information of the serving cell; for example, if configuration information needs to be added, modified, or released for a specific serving cell.

Identification information of the serving cell group; for example, if configuration information needs to be added, modified, or released for a specific group of serving cells.

Identification information of pre-configured cell group; for example, if configuration information needs to be added, modified, or released for a specific pre-configured cell group.

Twelfth indication information, used to indicate at least one of adding, modifying, or releasing pre-configured cells associated with the serving cell or serving cell group.

Thirteenth indication information, used to indicate at least one of adding, modifying, or releasing pre-configured cell groups associated with the serving cell or serving cell group.

Fourteenth indication information, used to indicate at least one of adding, modifying, or releasing configuration information associated with pre-configured cells or pre-configured cell groups.

Fifteenth indication information, used to indicate at least one of adding, modifying, or releasing configuration groups associated with pre-configured cells or pre-configured cell groups.

Sixteenth indication information, used to indicate at least one of adding, modifying, or releasing serving cell groups.

Step 3: After receiving the third command, the UE adds, modifies, or releases the corresponding configuration information.

Embodiment 8: Configuration conditions.

Step 1: The network device sends a second command to configure at least one serving cell for the UE; taking cell0, cell1, cell2, and cell3 as examples, where cell0 is the SpCell, cell1 is an activated SCell, and cell2 is a deactivated SCell. Here, cell0 through cell2 all belong to the same cell group (e.g., MCG), while cell3 belongs to a different cell group (e.g., SCG).

Step 2: The network sends the first command, which includes the identifier of a serving cell based on the following scenarios:
Example 1: The serving cell contains only cell0 or cell1, i.e., either the SpCell or an activated SCell, but not cell2, which is in a deactivated state.
Example 2: The serving cell can include any cell, regardless of its state. For example, if the serving cell is cell2, which is deactivated, the command notifies the UE to activate cell2.
Example 3: If the command is received via the MCG, the serving cell cannot include cell3. In this case, the identifier in the first command corresponds to the serving cell within the MCG configured for serving cells.

This concludes the introduction of the serving cell management method described in this disclosure. Below, this embodiment will provide further explanations of the corresponding devices, terminals, and network device using accompanying figures.

As shown in Figure 3, the disclosed embodiment provides a terminal 300, which includes the following components:
A first receiving unit 310, used to receive the first command sent by the network device.

A processing unit 320, used to manage the serving cell according to the first command and the configuration information of the pre-configured cell corresponding to the serving cell.

Optionally, the first command carries at least one of the following pieces of information:
Identification information of the serving cell.

Identification information of the first pre-configured cell to activate or apply.

First indication information, used to indicate the first configuration information of the first pre-configured cell to activate or apply.

Second indication information, used to indicate whether to release pre-configured cells other than the first pre-configured cell.

Third indication information, used to indicate whether to release configuration information corresponding to the first pre-configured cell other than the first configuration information.

Fourth indication information, used to indicate whether to release the configuration information of the source-activated pre-configured cell.

Fifth indication information, used to indicate at least one configuration information of the source-activated pre-configured cell that needs to be released.

Identification information of at least one secondary pre-configured cell whose configuration information needs to be released.

Sixth indication information, used to indicate at least one configuration information of the secondary pre-configured cell that needs to be released.

Seventh indication information, used to indicate at least one configuration information of the first pre-configured cell that needs to be released.

Identification information of pre-configured cell group.

Configuration group identification information.

Identification information of serving cell group.

Identification information of cell group.

Optionally, the first command further carries the first information required to activate the serving cell, which includes at least one of the following:
TCI information.

Activated uplink spatial division relationship.

Identification information of the downlink BWP.

Identification information of the uplink BWP.

Eighth indication information for indicating RLM RS.

Ninth indication information for indicating BFD RS.

Optionally, in cases where the first command carries the first information, the terminal performs at least one of the following operations based on the first information:
Activates the TCI.

Activates the uplink spatial division relationship.

Activates the downlink BWP.

Activates the uplink BWP.

Restarts or stops BFD-related timers.

Resets BFD-related counters.

Applies BFD RS.

Applies RLM RS.

Resets RLM-related counters.

Restarts or stops RLM-related timers.

Optionally, the first command is a physical layer command or a Medium Access Control-Control Element (MAC-CE) command.

Optionally, the serving cell is at least one of the following:
Special cell (SpCell).

Activated secondary cell (SCell).

Secondary cell in dormant mode.

Optionally, when the serving cell is a secondary cell, the terminal determines that the secondary cell is in an activated state according to the first command; and/or,
when the serving cell is a special cell, the terminal determines that the special cell is in an activated state according to the first command.

Optionally, the terminal 300 further includes:

A second receiving unit, used to receive the second command sent by the network device;

A determination unit, used to determine the configuration information of the pre-configured cell corresponding to the serving cell based on the second command;

The second command carries at least one of the following pieces of information:
Identification information of the serving cell;
Identification information of pre-configured cell group;
Identification information of serving cell group;
Configuration group identification information;
At least one pre-configured cell corresponding to the serving cell;
At least one configuration information of the pre-configured cells corresponding to the serving cell;
Tenth indication information, used to indicate the third pre-configured cell to activate or apply;
Eleventh indication information, used to indicate the second configuration information of the third pre-configured cell to activate or apply;
Correspondence between serving cells and serving cell groups;
Correspondence between pre-configured cells and pre-configured cell groups;
Correspondence between configuration information and configuration groups;
Association between serving cell groups or serving cells and pre-configured cell groups;
Association between pre-configured cells or pre-configured cell groups and configuration groups.

Optionally, the terminal performs at least one of the following operations based on the first command or second command:
Activates or applies the target pre-configured cell corresponding to the serving cell;
Activates or applies the target configuration information of the target pre-configured cell;
Deactivates configuration information of pre-configured cells other than the target pre-configured cell;
Deactivates configuration information corresponding to the target pre-configured cell other than the target configuration information;
Applies the C-RNTI corresponding to the target pre-configured cell;
Maintains the state of the serving cell;
Wherein the target pre-configured cell is the first pre-configured cell or the third pre-configured cell, and the target configuration information is the first configuration information or the second configuration information.

Optionally, the terminal 300 further includes:
A third receiving unit, used to receive a third command sent by the network device;
An updating unit, used to update the configuration information of the pre-configured cell corresponding to the serving cell according to the third command;
The third command carries at least one of the following pieces of information:
   Identification information of the serving cell;
   Identification information of the serving cell group;
   Identification information of pre-configured cell group;
   Twelfth indication information, used to indicate at least one of adding, modifying, or releasing pre-configured cells associated with the serving cell or the serving cell group;
   Thirteenth indication information, used to indicate at least one of adding, modifying, or releasing pre-configured cell groups associated with the serving cell or the serving cell group;
   Fourteenth indication information, used to indicate at least one of adding, modifying, or releasing configuration information associated with pre-configured cells or pre-configured cell groups;
   Fifteenth indication information, used to indicate at least one of adding, modifying, or releasing configuration groups associated with pre-configured cells or pre-configured cell groups;
   Sixteenth indication information, used to indicate at least one of adding, modifying, or releasing serving cell groups.

Optionally, the second command and/or the third command are Radio Resource Control (RRC) signaling.

It should be noted here that the terminal provided by this embodiment of the disclosure is capable of implementing all the method steps achieved by the embodiments of the serving cell management method on the terminal side described above and achieving the same technical effects. Therefore, parts of this embodiment identical to those of the method embodiments and their advantageous effects will not be redundantly elaborated.

To better achieve the purposes mentioned above, as shown in Figure 4, this embodiment of the disclosure provides a serving cell management device, which includes a memory 41, a transceiver 42, and a processor 43; wherein:
The memory 41 is used for storing computer programs;
The transceiver 42 is used to transmit and receive data under the control of the processor 43; for example, the transceiver 42 receives and transmits data under the control of the processor 43;
The processor 43 reads the computer programs stored in the memory 41 and executes the following operations:
   receiving the first command sent by the network device;
   managing the serving cell based on the first command and the configuration information of the pre-configured cell corresponding to the serving cell.

Optionally, the first command carries at least one of the following pieces of information:
Identification information of the serving cell;
Identification information of the first pre-configured cell to activate or apply;
First indication information, used to indicate the first configuration information of the first pre-configured cell to activate or apply;
Second indication information, used to indicate whether to release pre-configured cells other than the first pre-configured cell;
Third indication information, used to indicate whether to release configuration information corresponding to the first pre-configured cell other than the first configuration information;
Fourth indication information, used to indicate whether to release the configuration information of the source-activated pre-configured cell;
Fifth indication information, used to indicate at least one configuration information of the source-activated pre-configured cell that needs to be released;
Identification information of at least one secondary pre-configured cell whose configuration information needs to be released;
Sixth indication information, used to indicate at least one configuration information of the secondary pre-configured cell that needs to be released;
Seventh indication information, used to indicate at least one configuration information of the first pre-configured cell that needs to be released;
Identification information of pre-configured cell group;
Configuration group identification information;
Identification information of serving cell group;
Identification information of cell group.

Optionally, the first command further carries the first information required to activate the serving cell, which includes at least one of the following:
TCI information;
Activated uplink spatial division relationship;
Identification information of the downlink BWP;
Identification information of the uplink BWP;
Eighth indication information for indicating RLM RS;
Ninth indication information for indicating BFD RS.

Optionally, when the first command carries the first information, the processor 43 reads the computer program in the memory and performs at least one of the following operations:
Activates the TCI;
Activates the uplink spatial division relationship;
Activates the downlink BWP;
Activates the uplink BWP;
Restarts or stops BFD-related timers;
Resets BFD-related counters;
Applies BFD RS;
Applies RLM RS;
Resets RLM-related counters;
Restarts or stops RLM-related timers.

Optionally, the first command is a physical layer command or a Media Access Control-Control Element (MAC-CE) command.

Optionally, the serving cell is at least one of the following:
Special cell (SpCell);
Activated secondary cell (SCell);
Secondary cell in dormant mode.

Optionally, when the serving cell is a secondary cell, the terminal determines based on the first command that the secondary cell is in an activated state;
and/or, when the serving cell is a special cell, the terminal determines based on the first command that the special cell is in an activated state.

Optionally, the processor 43 is configured to read the computer program stored in the memory 41 and perform the following operations:
receiving the second command sent by the network device;
determining the configuration information of the pre-configured cell corresponding to the serving cell based on the second command;
The second command carries at least one of the following pieces of information:
   Identification information of the serving cell;
   Identification information of pre-configured cell group;
   Identification information of serving cell group;
   Configuration group identification information;
   At least one pre-configured cell corresponding to the serving cell;
   At least one configuration information corresponding to the pre-configured cells of the serving cell;
   Tenth indication information, used to indicate the third pre-configured cell to activate or apply;
   Eleventh indication information, used to indicate the second configuration information of the third pre-configured cell to activate or apply;
   Correspondence between serving cells and serving cell groups;
   Correspondence between pre-configured cells and pre-configured cell groups;
   Correspondence between configuration information and configuration groups;
   Association between serving cell groups or serving cells and pre-configured cell groups;
   Association between pre-configured cells or pre-configured cell groups and configuration groups.
Optionally, the processor 43 is configured to read the computer program stored in the memory 41 and perform at least one of the following operations:
   Activate or apply the target pre-configured cell corresponding to the serving cell;
   Activate or apply the target configuration information of the target pre-configured cell;
   Deactivate configuration information of pre-configured cells other than the target pre-configured cell;
   Deactivate configuration information corresponding to the target pre-configured cell other than the target configuration information;
   Apply the C-RNTI corresponding to the target pre-configured cell;
   Maintain the state of the serving cell;
   Wherein the target pre-configured cell is the first pre-configured cell or the third pre-configured cell, and the target configuration information is the first configuration information or the second configuration information.

Optionally, the processor 43 is further configured to read the computer program stored in the memory 41 and perform the following operations:
Receive the third command sent by the network device;
Update the configuration information of the pre-configured cell corresponding to the serving cell based on the third command;
The third command carries at least one of the following pieces of information:
   Identification information of the serving cell;
   Identification information of the serving cell group;
   Identification information of pre-configured cell group;
   Twelfth indication information, used to indicate at least one of adding, modifying, or releasing pre-configured cells associated with the serving cell or serving cell group;
   Thirteenth indication information, used to indicate at least one of adding, modifying, or releasing pre-configured cell groups associated with the serving cell or serving cell group;
   Fourteenth indication information, used to indicate at least one of adding, modifying, or releasing configuration information associated with pre-configured cells or pre-configured cell groups;
   Fifteenth indication information, used to indicate at least one of adding, modifying, or releasing configuration groups associated with pre-configured cells or pre-configured cell groups;
   Sixteenth indication information, used to indicate at least one of adding, modifying, or releasing serving cell groups.

Optionally, the second command and/or third command are Radio Resource Control (RRC) signaling.

In Fig. 4, bus architecture may include a number of buses and bridges connected to each other, so as to connect various circuits for one or more processors 43 and one or more memories 41. In addition, as is known in the art, the bus architecture may be used to connect any other circuits, such as a circuit for a peripheral device, a circuit for a voltage stabilizer and a power management circuit. A bus interface may be provided, and the transceiver 42 may consist of a plurality of elements, i.e., a transmitter and a receiver for communication with any other devices over a transmission medium. The transmission medium includes a wireless channel, a wired channel, or an optical cable. With respect to different UEs, a user interface 44 may also be provided for devices which are to be arranged inside or outside the UE, and these devices may include but not limited to a keypad, a display, a speaker, a microphone and a joystick. The processor 43 may take charge of managing the bus architecture as well as general processings. The memory 41 may store therein data for the operation of the processor 43.

The processor 43 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

It should be noted here that the above-mentioned device provided by the embodiments of this disclosure is capable of implementing all the method steps achieved by the terminal-side serving cell management method embodiment described above and achieving the same technical effects. Therefore, parts of this embodiment identical to those of the method embodiments and their advantageous effects will not be redundantly elaborated.

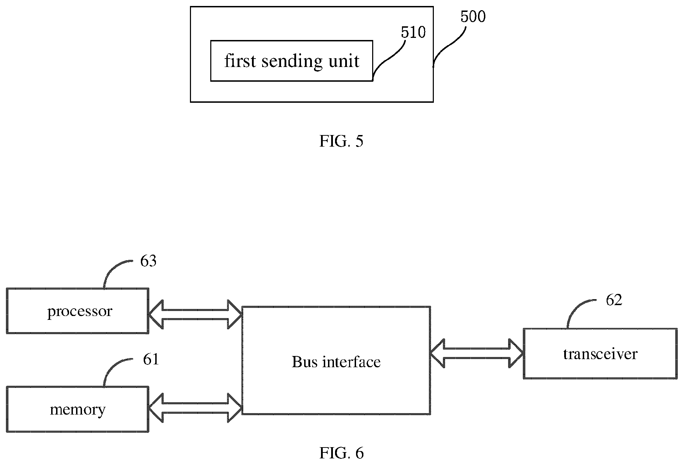

As shown in Figure 5, the disclosed embodiment provides a network device 500, which includes:
a first sending unit 510, used to send a first command to the terminal; wherein the first command is used to instruct the terminal to perform serving cell management based on the configuration information of the pre-configured cell corresponding to the serving cell.

Optionally, the first command carries at least one of the following pieces of information:
Identification information of the serving cell;
The identification information of the first pre-configured cell to activate or apply;
First indication information, used to indicate the first configuration information of the first pre-configured cell to activate or apply;
Second indication information, used to indicate whether to release pre-configured cells other than the first pre-configured cell;
Third indication information, used to indicate whether to release configuration information corresponding to the first pre-configured cell other than the first configuration information;
Fourth indication information, used to indicate whether to release the configuration information of the source-activated pre-configured cell;
Fifth indication information, used to indicate at least one configuration information of the source-activated pre-configured cell that needs to be released;
Identification information of at least one secondary pre-configured cell whose configuration information needs to be released;
Sixth indication information, used to indicate at least one configuration information of the secondary pre-configured cell that needs to be released;
Seventh indication information, used to indicate at least one configuration information of the first pre-configured cell that needs to be released;
Identification information of pre-configured cell group;
Configuration group identification information;
Identification information of serving cell group;
Identification information of cell group.

Optionally, the first command further carries the first information required to activate the serving cell; wherein the first information includes at least one of the following:
TCI information;
Activated uplink spatial division relationship;
Identification information of the downlink BWP;
Identification information of the uplink BWP;
Eighth indication information for indicating RLM RS;
Ninth indication information for indicating BFD RS.

Optionally, the first command is a physical layer command or a Media Access Control-Control Element (MAC-CE) command.

Optionally, the serving cell is at least one of the following:
Special cell;
Activated secondary cell;
Secondary cell in dormant mode.

Optionally, the network device 500 further includes:
A second sending unit, used to send a second command to the terminal, where the second command is used to determine the configuration information of the pre-configured cells corresponding to the serving cell;
wherein the second command carries at least one of the following pieces of information:
   Identification information of the serving cell;
   Identification information of pre-configured cell group;
   Configuration group identification information;
   Identification information of serving cell group;
   At least one pre-configured cell corresponding to the serving cell;
   At least one configuration information corresponding to the pre-configured cells of the serving cell;
   Tenth indication information, used to indicate the third pre-configured cell to activate or apply;
   Eleventh indication information, used to indicate the second configuration information of the third pre-configured cell to activate or apply;
   Correspondence between serving cells and serving cell groups;
   Correspondence between pre-configured cells and pre-configured cell groups;
   Correspondence between configuration information and configuration groups;
   Association between serving cell groups or serving cells and pre-configured cell groups;
   Association between pre-configured cells or pre-configured cell groups and configuration groups.

Optionally, the network device 500 further includes:
A third sending unit, used to send a third command to the terminal, where the third command is used to update the configuration information of the pre-configured cells corresponding to the serving cell;
wherein the third command carries at least one of the following pieces of information:
   Identification information of the serving cell;
   Identification information of the serving cell group;
   Identification information of pre-configured cell group;
   Twelfth indication information, used to indicate at least one of adding, modifying, or releasing pre-configured cells associated with the serving cell or serving cell group;
   Thirteenth indication information, used to indicate at least one of adding, modifying, or releasing pre-configured cell groups associated with the serving cell or serving cell group;
   Fourteenth indication information, used to indicate at least one of adding, modifying, or releasing configuration information associated with pre-configured cells or pre-configured cell groups;
   Fifteenth indication information, used to indicate at least one of adding, modifying, or releasing configuration groups associated with pre-configured cells or pre-configured cell groups;
   Sixteenth indication information, used to indicate at least one of adding, modifying, or releasing serving cell groups.

Optionally, the second command and/or the third command are Radio Resource Control (RRC) signaling.

It should be noted here that the network device provided in this embodiment of the disclosure can achieve all method steps described in the terminal-side serving cell management method embodiments above and achieve the same technical effects. Therefore, parts of this embodiment identical to those of the method embodiments and their advantageous effects will not be redundantly described.

As shown in Fig. 6, the embodiment of the present disclosure also provides a serving cell management apparatus, which includes memory 61, a transceiver 62, and a processor 63; wherein the memory 61 is used to store computer programs; the transceiver 62 is used for transmitting and receiving data under the control of the processor; the processor 63 is used to read the computer programs stored in the memory 61 and perform the following operations:
sending a first command to a terminal, wherein the first command is used to instruct the terminal to manage the serving cell based on the configuration information of a pre-configured cell corresponding to the serving cell.

Optionally, the first command carries at least one of the following information:
identification information of the serving cell;
identification information of the first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of a second pre-configured cell for which at least one configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

Optionally, the first command also carries first information needed to activate for the serving cell, wherein the first information includes at least one of the following:
TCI information;
uplink spatial relation;
activated downlink BWP (Bandwidth Part) identification information;
identification information of the uplink BWP;
eighth indication information for indicating the RLM RS;
ninth indication information for indicating the BFD RS.

Optionally, the first command is a physical layer command or a MAC CE command.

Optionally, the serving cell is at least one of the following:
a special cell;
an activated secondary cell;
a secondary cell in dormant mode.

Optionally, the processor 63 reads the computer program from the memory 61 and executes at least one of the following operations:
sending a second command to the terminal, wherein the second command carries at least one of the following information:
identification information of the serving cell;
identification information of pre-configured cell group;
identification information of serving cell group;
identification information of configuration information group;
at least one pre-configured cell corresponding to the serving cell;
at least one configuration information of the pre-configured cell corresponding to the serving cell;
tenth indication information for indicating a third pre-configured cell to activate or apply;
eleventh indication information for indicating the second configuration information of the third pre-configured cell to activate or apply;
correspondence between serving cell and serving cell group;
correspondence between pre-configured cell and pre-configured cell group;
correspondence between configuration information and configuration information group;
association between serving cell group or serving cell and pre-configured cell group;
association between pre-configured cell or pre-configured cell group and configuration information group.

Optionally, the processor 63 reads the computer program from the memory 61 and executes at least one of the following operations:
sending a third command to the terminal, the third command is used to update the configuration information of the pre-configured cell corresponding to the serving cell;
wherein the third command carries at least one of the following information:
identification information of the serving cell;
identification information of the serving cell group;
identification information of pre-configured cell group;
twelfth indication information for indicating at least one of the addition, modification, or release of pre-configured cells associated with the serving cell or serving cell group;
thirteenth indication information for indicating at least one of the addition, modification, or release of pre-configured cell groups associated with the serving cell or serving cell group;
fourteenth indication information for indicating at least one of the addition, modification, or release of configuration information associated with the pre-configured cell or pre-configured cell group;
fifteenth indication information for indicating at least one of the addition, modification, or release of configuration information groups associated with the pre-configured cell or pre-configured cell group;
sixteenth indication information for indicating at least one of the addition, modification, or release of the serving cell group.

Optionally, the second and/or third commands are Radio Resource Control signaling.

In Fig. 6, bus architecture may include a number of buses and bridges connected to each other, so as to connect various circuits for one or more processors 63 and one or more memories 61. In addition, as is known in the art, the bus architecture may be used to connect any other circuits, such as a circuit for a peripheral device, a circuit for a voltage stabilizer and a power management circuit. A bus interface may be provided, and the transceiver 62 may consist of a plurality of elements, i.e., a transmitter and a receiver for communication with any other devices over a transmission medium. The transmission medium includes a wireless channel, a wired channel, or an optical cable. The processor 63 may take charge of managing the bus architecture as well as general processing. The memory 61 may store therein data for the operation of the processor 63.

Optionally, the processor 63 may be a central processing unit (CPU), an application specific integrated circuit (ASIC), a field-programmable gate array (FPGA) or a complex programmable logic device (CPLD). The processor may also adopt a multi-core architecture.

The processor, by invoking the computer program stored in the memory, is used to execute any of the methods provided in the embodiments of this disclosure according to the obtained executable instructions. The processor and memory may also be physically arranged separately.

It should be noted here that the above-mentioned terminal provided by the embodiments of the present disclosure can implement all the method steps implemented by the above-mentioned embodiment of the serving cell management method performed by the network device, and can achieve the same technical effect. Parts and beneficial effects in this embodiment that are the same as those in the method embodiment will not be described in detail here.

It should be noted that the division of units in the embodiments of the present disclosure is illustrative, and is only a logical function division, and there may be another division method in actual implementation. In addition, the functional units in various embodiments of the present disclosure may be integrated into one processing unit, or each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute all or part of the steps of the methods described in the various embodiments of the present disclosure. The aforementioned storage media include: a universal serial bus (USB) flash drive, removable hard disk, read-only memory (ROM), random access memory (RAM), magnetic disk, optical disc or other media that can store program codes.

It should be noted here that the above-mentioned device provided in this embodiment of the disclosure is capable of implementing all the method steps achieved in the embodiments of the service cell management method on the network device side described above and achieving the same technical effects. Therefore, parts of this embodiment identical to those of the method embodiments and their advantageous effects will not be redundantly described.

The processor-readable storage medium is any available medium or data storage device capable of being accessed by the processor, which includes, but not limited to, a magnetic memory (e.g., floppy disk, hard disk, magnetic tape, or Magnetic Optical disk (MO)), an optical memory (e.g., Compact Disk (CD), Digital Versatile Disk (DVD), Blue-ray Disk (BD), or High-definition Versatile Disk (HVD)), or a semiconductor memory (e.g., Read-Only Memory (ROM), Electrically Programmable ROM (EPROM), Electrically Erasable PROM (EEPROM), NAND flash, or Solid-State Disk or Solid State Drive (SSD)).

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, the determination module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

In addition, it should be pointed out that, in the device and method disclosed herein, it is apparent that various components or steps can be decomposed and/or recombined. Such decompositions and/or recombinations shall be regarded as equivalent solutions of this disclosure. Furthermore, the execution of the above series of processing steps may naturally be performed sequentially in the described order; however, it is not necessarily required to be executed in a strict time sequence, as certain steps can be executed in parallel or independently of each other. For those skilled in the art, it will be understood that all or any steps or components of the disclosed methods and devices can be implemented in any computing device (including processors, storage media, etc.) or a network of computing devices, in hardware, firmware, software, or a combination thereof. This can be achieved by individuals skilled in the art through the application of their basic programming skills after reading the description of this disclosure.

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A serving cell management method, comprising:
receiving, by a terminal, a first command sent by network device;
performing, by the terminal, management of the serving cell according to the first command and the configuration information of a pre-configured cell corresponding to the serving cell.

2. The method according to claim 1, wherein the first command carries at least one of the following information:
identification information of the serving cell;
identification information of first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of at least one second pre-configured cell for which configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

3. The method according to claim 1 or 2, wherein the first command further carries first information needed to activate for the serving cell; wherein the first information comprises at least one of the following:
Transmission Configuration Indicator (TCI) information;
uplink spatial relation;
identification information of the downlink Bandwidth Part (BWP);
identification information of the uplink BWP;
eighth indication information for indicating the Radio Link Monitoring Reference Signal (RLM RS);
ninth indication information for indicating the Beam Failure Detection Reference Signal (BFD RS).

4. The method according to claim 3, wherein when the first command carries the first information, the terminal further performs at least one of the following operations according to the first information:
activating the TCI;
activating the uplink spatial relation;
activating the downlink BWP;
activating the uplink BWP;
restarting or stopping the BFD-related timer;
resetting the BFD-related counter;
applying the BFD RS;
applying the RLM RS;
resetting the RLM-related counter;
restarting or stopping the RLM-related timer.

5. The method according to claim 1, wherein the first command is a physical layer command or a Medium Access Control (MAC) Control Element (CE) command.

6. The method according to claim 1, wherein the serving cell is one of the following:
a special cell;
an activated secondary cell;
a secondary cell in dormant mode.

7. The method according to claim 1, wherein when the serving cell is a secondary cell, the terminal determines that the secondary cell is activated according to the first command;
and/or,
when the serving cell is a special cell, the terminal determines that the special cell is activated according to the first command.

8. The method according to claim 1, wherein before the terminal receiving the first command sent by the network device, the method further comprises:
receiving, by the terminal, a second command sent by the network device;
determining, by the terminal, the configuration information of the pre-configured cell corresponding to the serving cell according to the second command;
wherein the second command carries at least one of the following:
identification information of the serving cell;
identification information of pre-configured cell group;
identification information of configuration information group;
identification information of serving cell group;
at least one pre-configured cell corresponding to the serving cell;
at least one configuration information of the pre-configured cell corresponding to the serving cell;
tenth indication information for indicating a third pre-configured cell to activate or apply;
eleventh indication information for indicating the second configuration information of the third pre-configured cell to activate or apply;
correspondence between serving cell and serving cell group;
correspondence between pre-configured cell and pre-configured cell group;
correspondence between configuration information and configuration information group;
association between serving cell group or serving cell and pre-configured cell group;
association between pre-configured cell or pre-configured cell group and configuration information group.

9. The method according to claim 1 or 2 or 8, wherein the terminal performs at least one of the following operations according to the first command or the second command:
activating or applying the target pre-configured cell corresponding to the serving cell;
activating or applying the target configuration information of the target pre-configured cell;
deactivating the configuration information of pre-configured cells other than the target pre-configured cell;
deactivating the configuration information corresponding to the target pre-configured cell other than the target configuration information;
applying the Cell Radio Network Temporary Identifier (C-RNTI) corresponding to the target pre-configured cell;
maintaining the state of the serving cell;
wherein the target pre-configured cell is the first pre-configured cell or the third pre-configured cell, and the target configuration information is the first configuration information or the second configuration information.

10. The method according to claim 1, further comprising:
receiving, by the terminal, a third command sent by the network device;
updating, by the terminal, the configuration information of the pre-configured cell corresponding to the serving cell according to the third command;
wherein the third command carries at least one of the following:
identification information of the serving cell;
identification information of the serving cell group;
identification information of the pre-configured cell group;
twelfth indication information for indicating at least one of addition, modification, or release of pre-configured cells associated with the serving cell or serving cell group;
thirteenth indication information for indicating at least one of the addition, modification, or release of pre-configured cell groups associated with the serving cell or serving cell group;
fourteenth indication information for indicating at least one of the addition, modification, or release of configuration information associated with the pre-configured cell or pre-configured cell group;
fifteenth indication information for indicating at least one of the addition, modification, or release of configuration information groups associated with the pre-configured cell or pre-configured cell group;
sixteenth indication information for indicating at least one of the addition, modification, or release of the serving cell group.

11. The method according to claim 8 or 10, the second command and/or the third command is Radio Resource Control signaling.

12. A serving cell management method, comprising:
sending, by a network device, a first command to a terminal, wherein the first command is used to instruct the terminal to manage the serving cell based on the configuration information of a pre-configured cell corresponding to the serving cell.

13. The method according to claim 12, wherein the first command carries at least one of the following information:
identification information of the serving cell;
identification information of the first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of a second pre-configured cell for which at least one configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

14. The method according to claim 12 or 13, wherein the first command further carries first information needed to activate for the serving cell, wherein the first information comprises at least one of the following:
TCI information;
uplink spatial relation;
identification information of the downlink BWP;
identification information of the uplink BWP;
eighth indication information for indicating the RLM RS;
ninth indication information for indicating the BFD RS.

15. The method according to claim 12, wherein the first command is a physical layer command or a Medium Access Control (MAC) Control Element command.

16. The method according to claim 12, wherein the serving cell is at least one of the following:
a special cell;
an activated secondary cell;
a secondary cell in dormant mode.

17. The method according to claim 12, wherein before the network device sending the first command to the terminal, the method further comprises:
sending, by the network device, a second command to the terminal, the second command is used to determine the configuration information of the pre-configured cell corresponding to the serving cell;
wherein the second command carries at least one of the following:
identification information of the serving cell;
identification information of pre-configured cell group;
identification information of serving cell group;
identification information of configuration information group;
at least one pre-configured cell corresponding to the serving cell;
at least one configuration information of the pre-configured cell corresponding to the serving cell;
tenth indication information for indicating a third pre-configured cell to activate or apply;
eleventh indication information for indicating the second configuration information of the third pre-configured cell to activate or apply;
correspondence between serving cell and serving cell group;
correspondence between pre-configured cell and pre-configured cell group;
correspondence between configuration information and configuration information group;
association between serving cell group or serving cell and pre-configured cell group;
association between pre-configured cell or pre-configured cell group and configuration information group.

18. The method according to claim 12, further comprising:
sending, by the network device, a third command to the terminal, the third command is used to update the configuration information of the pre-configured cell corresponding to the serving cell;
wherein the third command carries at least one of the following:
identification information of the serving cell;
identification information of the serving cell group;
identification information of pre-configured cell group;
twelfth indication information for indicating at least one of the addition, modification, or release of pre-configured cells associated with the serving cell or serving cell group;
thirteenth indication information for indicating at least one of the addition, modification, or release of pre-configured cell groups associated with the serving cell or serving cell group;
fourteenth indication information for indicating at least one of the addition, modification, or release of configuration information associated with the pre-configured cell or pre-configured cell group;
fifteenth indication information for indicating at least one of the addition, modification, or release of configuration information groups associated with the pre-configured cell or pre-configured cell group;
sixteenth indication information for indicating at least one of the addition, modification, or release of the serving cell group.

19. The method according to claim 17 or 18, wherein the second command and/or third command is Radio Resource Control signaling.

20. A serving cell management apparatus, comprising a memory, a transceiver, and a processor;
wherein the memory is used to store computer programs; the transceiver is used for transmitting and receiving data under the control of the processor; the processor is used to read the computer programs stored in the memory and perform the following steps:
receiving a first command sent by a network device; and
managing the serving cell according to the first command and the configuration information of the pre-configured cell corresponding to the serving cell.

21. The serving cell management apparatus according to claim 20, wherein the first command carries at least one of the following:
identification information of the serving cell;
identification information of the first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of a second pre-configured cell for which at least one configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

22. The serving cell management apparatus according to claim 20 or 21, wherein the first command further carries first information needed to activate for the serving cell, wherein the first information comprises at least one of the following:
activated TCI (Transmission Configuration Indicator) information;
uplink spatial relation;
activated downlink BWP (Bandwidth Part) identification information;
identification information of the uplink BWP;
eighth indication information for indicating the RLM RS (Radio Link Monitoring Reference Signal);
ninth indication information for indicating the BFD RS.

23. The serving cell management apparatus according to claim 22, wherein when the first command carries the first information, the processor reads the computer program from the memory and executes at least one of the following operations:
activating the TCI;
activating the uplink spatial relation;
activating the downlink BWP;
activating the uplink BWP;
restarting or stopping BFD-related timer;
resetting BFD-related counter;
applying BFD RS;
applying RLM RS;
resetting RLM-related counter;
restarting or stopping RLM-related timer.

24. The serving cell management apparatus according to claim 20, wherein the first command is a physical layer command or MAC CE command.

25. The serving cell management apparatus according to claim 20, wherein the serving cell is at least one of the following:
a special cell;
an activated secondary cell;
a secondary cell in dormant mode.

26. The serving cell management apparatus according to claim 20, wherein when the serving cell is a secondary cell, the serving cell is determined as activated based on the first command; and/or
if the serving cell is a special cell, the serving cell is determined as activated based on the first command.

27. The serving cell management apparatus according to claim 20, wherein the processor reads the computer program and performs the following operation:
receiving the second command sent by the network device; and
determining the configuration information of the pre-configured cell corresponding to the serving cell based on the second command;
wherein the second command carries at least one of the following:
identification information of the serving cell;
identification information of the serving cell group;
identification information of pre-configured cell group;
at least one pre-configured cell corresponding to the serving cell;
at least one configuration information of the pre-configured cell corresponding to the serving cell;
identification information of configuration information group;
tenth indication information for indicating the activation or application of the third pre-configured cell;
eleventh indication information for indicating the second configuration information of the third pre-configured cell to activate or apply;
correspondence between serving cell and serving cell group;
correspondence between pre-configured cell and pre-configured cell group;
correspondence between configuration information and configuration information group;
association between serving cell group or serving cell and pre-configured cell group;
association between pre-configured cell or pre-configured cell group and configuration information group.

28. The serving cell management apparatus according to claim 20 or 21 or 27, wherein the processor reads the computer program and performs at least one of the following operations:
activating or applying the target pre-configured cell corresponding to the serving cell;
activating or applying the target configuration information of the target pre-configured cell;
deactivating configuration information of pre-configured cells other than the target pre-configured cell;
deactivating configuration information corresponding to the target pre-configured cell other than the target configuration information;
applying the C-RNTI (Cell Radio Network Temporary Identifier) corresponding to the target pre-configured cell;
maintaining the state of the serving cell;
wherein the target pre-configured cell is the first pre-configured cell or the third pre-configured cell, and the target configuration information is the first configuration information or the second configuration information.

29. The serving cell management apparatus according to claim 20, wherein the processor is used to read the computer program and perform the following operations:
receiving the third command sent by the network device; and
updating the configuration information of the pre-configured cell corresponding to the serving cell according to the third command;
wherein the third command carries at least one of the following:
identification information of the serving cell;
identification information of the serving cell group;
identification information of pre-configured cell group;
twelfth indication information for indicating at least one of the addition, modification, or release of pre-configured cells associated with the serving cell or serving cell group;
thirteenth indication information for indicating at least one of the addition, modification, or release of pre-configured cell groups associated with the serving cell or serving cell group;
fourteenth indication information for indicating at least one of the addition, modification, or release of configuration information associated with the pre-configured cell or pre-configured cell group;
fifteenth indication information for indicating at least one of the addition, modification, or release of configuration information groups associated with the pre-configured cell or pre-configured cell group;
sixteenth indication information for indicating at least one of the addition, modification, or release of the serving cell group.

30. The serving cell management apparatus according to claim 27 or 29, wherein the second command and/or the third command is Radio Resource Control signaling.

31. A terminal, comprising:
a first receiving unit for receiving a first command sent by a network device; and
a processing unit for managing the serving cell according to the first command and configurations.

32. The terminal according to claim 31, wherein the first command carries at least one of the following:
identification information of the serving cell;
identification information of first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of at least one second pre-configured cell for which configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

33. The terminal according to claim 31 or 32, wherein the first command further carries first information needed to activate for the serving cell; wherein the first information comprises at least one of the following:
Transmission Configuration Indicator (TCI) information;
uplink spatial relation;
identification information of the downlink Bandwidth Part (BWP)
identification information of the uplink BWP;
eighth indication information for indicating the Radio Link Monitoring Reference Signal (RLM RS);
ninth indication information for indicating the Beam Failure Detection Reference Signal (BFD RS).

34. The terminal according to claim 33, wherein when the first command carries the first information, the terminal further performs at least one of the following operations according to the first information:
activating the TCI;
activating the uplink spatial relation;
activating the downlink BWP;
activating the uplink BWP;
restarting or stopping the BFD-related timer;
resetting the BFD-related counter;
applying the BFD RS;
applying the RLM RS;
resetting the RLM-related counter;
restarting or stopping the RLM-related timer.

35. The terminal according to claim 31, wherein the first command is a physical layer command or a MAC CE command.

36. The terminal according to claim 31, wherein the serving cell is at least one of the following:
a special cell;
an activated secondary cell;
a secondary cell in dormant mode.

37. The terminal according to claim 31, wherein when the serving cell is a secondary cell, the terminal determines that the secondary cell is activated according to the first command;
and/or,
when the serving cell is a special cell, the terminal determines that the special cell is activated according to the first command.

38. The terminal according to claim 31, further comprising:
a second receiving unit for receiving a second command sent by the network device;
a determining unit for determining the configuration information of the pre-configured cell corresponding to the serving cell according to the second command;
wherein the second command carries at least one of the following:
identification information of the serving cell;
identification information of pre-configured cell group;
identification information of configuration information group;
identification information of serving cell group;
at least one pre-configured cell corresponding to the serving cell;
at least one configuration information of the pre-configured cell corresponding to the serving cell;
tenth indication information for indicating a third pre-configured cell to activate or apply;
eleventh indication information for indicating the second configuration information of the third pre-configured cell to activate or apply;
correspondence between serving cell and serving cell group;
correspondence between pre-configured cell and pre-configured cell group;
correspondence between configuration information and configuration information group;
association between serving cell group or serving cell and pre-configured cell group;
association between pre-configured cell or pre-configured cell group and configuration information group.

39. The terminal according to claim 31 or 32 or 38, wherein the terminal performs at least one of the following operations according to the first command or the second command:
activating or applying the target pre-configured cell corresponding to the serving cell;
activating or applying the target configuration information of the target pre-configured cell;
deactivating the configuration information of pre-configured cells other than the target pre-configured cell;
deactivating the configuration information corresponding to the target pre-configured cell other than the target configuration information;
applying the Cell Radio Network Temporary Identifier (C-RNTI) corresponding to the target pre-configured cell;
maintaining the state of the serving cell;
wherein the target pre-configured cell is the first pre-configured cell or the third pre-configured cell, and the target configuration information is the first configuration information or the second configuration information.

40. The terminal according to claim 31, further comprising:
a third receiving unit for receiving a third command sent by the network device;
an updating unit for updating the configuration information of the pre-configured cell corresponding to the serving cell according to the third command;
wherein the third command carries at least one of the following:
identification information of the serving cell;
identification information of the serving cell group;
identification information of pre-configured cell group;
twelfth indication information for indicating at least one of addition, modification, or release of pre-configured cells associated with the serving cell or serving cell group;
thirteenth indication information for indicating at least one of the addition, modification, or release of pre-configured cell groups associated with the serving cell or serving cell group;
fourteenth indication information for indicating at least one of the addition, modification, or release of configuration information associated with the pre-configured cell or pre-configured cell group;
fifteenth indication information for indicating at least one of the addition, modification, or release of configuration information groups associated with the pre-configured cell or pre-configured cell group;
sixteenth indication information for indicating at least one of the addition, modification, or release of the serving cell group.

41. The terminal according to claim 38 or 40, wherein the second command and/or the third command is Radio Resource Control signaling.

42. A serving cell management apparatus, comprising a memory, a transceiver, and a processor;
wherein the memory is used to store computer programs; the transceiver is used for transmitting and receiving data under the control of the processor; the processor is used to read the computer programs stored in the memory and perform the following operations:
sending a first command to a terminal, wherein the first command is used to instruct the terminal to manage the serving cell based on the configuration information of a pre-configured cell corresponding to the serving cell.

43. The serving cell management apparatus according to claim 42, wherein the first command carries at least one of the following:
identification information of the serving cell;
identification information of the first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of a second pre-configured cell for which at least one configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

44. The serving cell management apparatus according to claim 42 or 43, wherein, the first command further carries first information needed to activate for the serving cell, wherein the first information comprises at least one of the following:
TCI information;
uplink spatial relation;
activated downlink BWP (Bandwidth Part) identification information;
identification information of the uplink BWP;
eighth indication information for indicating the RLM RS;
ninth indication information for indicating the BFD RS.

45. The serving cell management apparatus according to claim 42, wherein, the first command is a physical layer command or a MAC CE command.

46. The serving cell management apparatus according to claim 42, wherein the serving cell is at least one of the following:
a special cell;
an activated secondary cell;
a secondary cell in dormant mode.

47. The serving cell management apparatus according to claim 42, wherein the processor reads the computer program from the memory and executes at least one of the following operations:
sending a second command to the terminal, wherein the second command carries at least one of the following information:
identification information of the serving cell;
identification information of pre-configured cell group;
identification information of serving cell group;
identification information of configuration information group;
at least one pre-configured cell corresponding to the serving cell;
at least one configuration information of the pre-configured cell corresponding to the serving cell;
tenth indication information for indicating a third pre-configured cell to activate or apply;
eleventh indication information for indicating the second configuration information of the third pre-configured cell to activate or apply;
correspondence between serving cell and serving cell group;
correspondence between pre-configured cell and pre-configured cell group;
correspondence between configuration information and configuration information group;
association between serving cell group or serving cell and pre-configured cell group;
association between pre-configured cell or pre-configured cell group and configuration information group.

48. The serving cell management apparatus according to claim 42, wherein the processor reads the computer program from the memory and executes at least one of the following operations:
sending a third command to the terminal, the third command is used to update the configuration information of the pre-configured cell corresponding to the serving cell;
wherein the third command carries at least one of the following information:
identification information of the serving cell;
identification information of the serving cell group;
identification information of pre-configured cell group;
twelfth indication information for indicating at least one of the addition, modification, or release of pre-configured cells associated with the serving cell or serving cell group;
thirteenth indication information for indicating at least one of the addition, modification, or release of pre-configured cell groups associated with the serving cell or serving cell group;
fourteenth indication information for indicating at least one of the addition, modification, or release of configuration information associated with the pre-configured cell or pre-configured cell group;
fifteenth indication information for indicating at least one of the addition, modification, or release of configuration information groups associated with the pre-configured cell or pre-configured cell group;
sixteenth indication information for indicating at least one of the addition, modification, or release of the serving cell group.

49. The serving cell management apparatus according to claim 47 or 48, wherein, the second command and/or the third command is Radio Resource Control signaling.

50. A network device, comprising:
a first sending unit for sending a first command to a terminal, wherein the first command is used to instruct the terminal to manage the serving cell based on the configuration information of a pre-configured cell corresponding to the serving cell.

51. The network device according to claim 50, wherein the first command carries at least one of the following:
identification information of the serving cell;
identification information of the first pre-configured cell to activate or apply;
first indication information for indicating the first configuration information of the first pre-configured cell to activate or apply;
second indication information for indicating whether to release pre-configured cells other than the first pre-configured cell;
third indication information for indicating whether to release configuration information corresponding to the first pre-configured cell other than the first configuration information;
fourth indication information for indicating whether to release the configuration information of the source activated pre-configured cell;
fifth indication information for indicating at least one configuration information of the source activated pre-configured cell that needs to be released;
identification information of a second pre-configured cell for which at least one configuration information needs to be released;
sixth indication information for indicating at least one configuration information of the second pre-configured cell that needs to be released;
seventh indication information for indicating at least one configuration information of the first pre-configured cell that needs to be released;
identification information of pre-configured cell group;
identification information of configuration information group;
identification information of serving cell group;
identification information of cell group.

52. The network device according to claim 50 or 51, wherein, the first command further carries first information needed to activate for the serving cell, wherein the first information comprises at least one of the following:
TCI information;
uplink spatial relation;
identification information of the downlink BWP;
identification information of the uplink BWP;
eighth indication information for indicating the RLM RS;
ninth indication information for indicating the BFD RS.

53. The network device according to claim 50, wherein the first command is a physical layer command or a MAC CE command.

54. The network device according to claim 50, wherein the serving cell is at least one of the following:
a special cell;
an activated secondary cell;
a secondary cell in dormant mode.

55. The network device according to claim 50, further comprising:
a second sending unit, for sending a second command to the terminal, the second command is used to determine the configuration information of the pre-configured cell corresponding to the serving cell;
wherein the second command carries at least one of the following information:
identification information of the serving cell;
identification information of pre-configured cell group;
identification information of serving cell group;
identification information of configuration information group;
at least one pre-configured cell corresponding to the serving cell;
at least one configuration information of the pre-configured cell corresponding to the serving cell;
tenth indication information for indicating a third pre-configured cell to activate or apply;
eleventh indication information for indicating the second configuration information of the third pre-configured cell to activate or apply;
correspondence between serving cell and serving cell group;
correspondence between pre-configured cell and pre-configured cell group;
correspondence between configuration information and configuration information group;
association between serving cell group or serving cell and pre-configured cell group;
association between pre-configured cell or pre-configured cell group and configuration information group.

56. The network device according to claim 50, further comprising:
a third sending unit, for sending a third command to the terminal, the third command is used to update the configuration information of the pre-configured cell corresponding to the serving cell;
wherein the third command carries at least one of the following information:
identification information of the serving cell;
identification information of the serving cell group;
identification information of pre-configured cell group;
twelfth indication information for indicating at least one of the addition, modification, or release of pre-configured cells associated with the serving cell or serving cell group;
thirteenth indication information for indicating at least one of the addition, modification, or release of pre-configured cell groups associated with the serving cell or serving cell group;
fourteenth indication information for indicating at least one of the addition, modification, or release of configuration information associated with the pre-configured cell or pre-configured cell group;
fifteenth indication information for indicating at least one of the addition, modification, or release of configuration information groups associated with the pre-configured cell or pre-configured cell group;
sixteenth indication information for indicating at least one of the addition, modification, or release of the serving cell group.

57. The network device according to claim 55 or 56, wherein the second command and/or the third command is Radio Resource Control signaling.

58. A processor readable storage medium, comprising computer readable programs stored therein, for enabling a processor to execute the steps of the serving cell management method of the terminal side according to any one of claims 1 to 11, or for enabling the processor to execute the steps of the serving cell management method of the network device side according to any one of claims 12 to 19.
